(19) Europäisches Patentamt
European Patent Office
Office européen des brevets

(11) **EP 2 795 268 B1**

(12) **EUROPÄISCHE PATENTSCHRIFT**

(45) Veröffentlichungstag und Bekanntmachung des Hinweises auf die Patenterteilung:
**19.02.2020  Patentblatt 2020/08**

(21) Anmeldenummer: **12798220.5**

(22) Anmeldetag: **22.11.2012**

(51) Int Cl.:
*G01F 23/284* (2006.01)

(86) Internationale Anmeldenummer:
**PCT/EP2012/073343**

(87) Internationale Veröffentlichungsnummer:
**WO 2013/092099 (27.06.2013 Gazette 2013/26)**

(54) **VERFAHREN UND MESSGERÄT ZUR FÜLLSTANDSMESSUNG**

METHOD AND MEASURING DEVICE FOR FILL LEVEL MEASUREMENT

PROCÉDÉ ET APPAREIL POUR MESURER LE NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.12.2011  DE 102011089231**

(43) Veröffentlichungstag der Anmeldung:
**29.10.2014  Patentblatt 2014/44**

(73) Patentinhaber: **Endress+Hauser SE+Co. KG**
**79689 Maulburg (DE)**

(72) Erfinder:
• **VOGEL, Markus**
  **79688 Hausen i.W. (DE)**
• **MALINOVSKIY, Alexey**
  **79689 Maulburg (DE)**
• **GORENFLO, Stefan**
  **79688 Hausen (DE)**
• **SPANKE, Dietmar**
  **79585 Steinen (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A1- 2 088 453          WO-A1-2009/031884
US-A- 5 457 990           US-A- 6 087 978
US-A1- 2003 146 867       US-A1- 2011 098 970

**Beschreibung**

Die Erfindung betrifft ein Verfahren und ein Messgerät zur Messung eines Füllstands eines in einem Behälter befindlichen Füllguts, bei dem in aufeinander folgenden Messzyklen jeweils mittels einer Sende- und Empfangseinrichtung mit einer vorgegebenen Wiederholfrequenz Signalpulse vorgegebener Frequenz in den Behälter gesendet, und deren im Behälter in Richtung der Sende- und Empfangseinrichtung zurück reflektierten Signalanteile nach einer von deren zurückgelegten Wegstrecke abhängigen Laufzeit als Empfangssignal empfangen werden, anhand des Empfangssignals jeweils ein eine im Empfangssignal enthaltene Amplituden- und Phaseninformation des Empfangssignals als Funktion der zugehörigen Laufzeit wiedergebendes Hilfssignal über einen vorgegebenen Laufzeitbereich abgeleitet wird, anhand des Hilfssignals eine Laufzeit eines an einer Füllgutoberfläche reflektierten Signalanteils bestimmt wird, und der Füllstand anhand einer Ausbreitungsgeschwindigkeit der Signalpulse, einer Einbauhöhe der Sende- und Empfangseinrichtung oberhalb des Behälters und der Laufzeit des an der Füllgutoberfläche reflektierten Signalanteils bestimmt wird.

Derartige nach dem Laufzeitprinzip arbeitende Füllstandsmessgeräte werden in weiten Bereichen der industriellen Messtechnik eingesetzt.

Eine in der industriellen Messtechnik eingesetzte Messgerätgruppe dieser Art bilden mit Mikrowellen nach dem Pulsradar-Verfahren arbeitende Füllstandsmessgeräte. Letztere werden beispielsweise von der Anmelderin unter dem Produktnamen Micropilot vertrieben.

Beim Pulsradar-Verfahren werden periodisch mit einer vorgegebenen Wiederholfrequenz, z.B. einer Wiederholfrequenz in der Größenordnung von 1 bis 2 MHz, kurze Mikrowellenpulse mit Frequenzen im Gigahertzbereich in Richtung des Füllguts gesendet, und deren in Richtung der Sende- und Empfangseinrichtung zurück reflektierten Signalanteile nach einer von der im Behälter zurückgelegten Wegstrecke abhängigen Laufzeit empfangen. Dabei wird regelmäßig anhand des Empfangssignals ein Hilfssignal abgeleitet, dass die im Empfangssignal enthaltene Amplituden- und Phaseninformation des Empfangssignals als Funktion der zugehörigen Laufzeit wiedergibt.

Aufgrund der hohen Signalfrequenzen und der in der Regel sehr kurzen aufzulösenden Laufzeiten bzw. Laufzeitunterschiede wird hierzu ein häufig als Zwischenfrequenzsignal bezeichnetes Hilfssignal generiert, das ein zeitlich gedehntes Abbild des Empfangssignals ist. Ein entsprechendes Verfahren ist beispielsweise in der EP 1 324 067 A2 beschrieben. Wie dort ebenfalls beschrieben, wird das Hilfssignal üblicher Weise nachfolgend gleichgerichtet und über einen Tiefpassfilter und einen Analog-Digitalwandler einer Auswerteeinheit zugeführt. Da die Amplitude der Empfangssignale mit dem Quadrat der zurückgelegten Wegstrecke abnimmt, kann das Empfangssignal stark unterschiedliche Amplituden aufweisen. Um diese einer besseren messtechnischen Erfassung zugänglich zu machen, wird das Hilfssignal vorzugsweise zusätzlich logarithmiert. Die Messung der Laufzeit des an der Füllgutoberfläche reflektierten Signalanteils erfolgt nun, indem eine häufig als Amplituden-Hüllkurve bezeichnete Einhüllende des gleichgerichteten, logarithmierten, gefilterten und digitalisierten Hilfssignals bestimmt wird. Die Hüllkurve gibt den Verlauf der Amplitude des zeitlich gedehnten Empfangssignals als Funktion der Laufzeit wieder. Auf eine Reflektion an einem in einem zu messenden Abstand von der Sende- und Empfangseinrichtung befindlichen Reflektor zurück zuführende Signalanteile des Empfangssignals bewirken in der Hüllkurve ein Maximum bei der für den Weg zum zugehörigen Reflektor und zurück benötigten Laufzeit. Entsprechend ergibt sich aus der Laufzeit des Maximums der Hüllkurve und der Ausbreitungsgeschwindigkeit der verwendeten Signale unmittelbar der gesuchte Abstand.

Es ist bekannt, die Messgenauigkeit derartiger Füllstandsmessgeräte zu verbessern, indem neben der beschriebenen Auswertung der Amplituden des Empfangssignals bzw. des daraus abgeleiteten Zwischenfrequenzsignals zusätzlich eine Phasendifferenz zwischen Sende- und Empfangssignal bestimmt, und zur Korrektur der aus der Amplitudenauswertung bestimmten Laufzeit des an der Füllgutoberfläche reflektierten Signalanteils verwendet wird.

Entsprechende Verfahren und Messgeräte sind beispielsweise in der DE 44 07 369 A1 und der WO 02/065066 A1 beschrieben. Dabei sind zur Bestimmung des Phasenbezugs zwischen Sende- und Empfangssignal in der Regel verhältnismäßig aufwendige Schaltungen und Auswertungsverfahren erforderlich.

Ein schaltungs- und auswertungstechnisch deutlich kosten- und energieeffizienteres Verfahren ist aus der EP 1324 067 A2 bekannt.

Dort ist ein Verfahren zur Messung eines Füllstands eines in einem Behälter befindlichen Füllguts beschrieben, bei dem in aufeinander folgenden Messzyklen jeweils

- mittels einer Sende- und Empfangseinrichtung mit einer vorgegebenen Wiederholfrequenz Signalpulse vorgegebener Frequenz in den Behälter gesendet, und deren im Behälter in Richtung der Sende- und Empfangseinrichtung zurück reflektierten Signalanteile nach einer von deren zurückgelegten Wegstrecke abhängigen Laufzeit als Empfangssignal empfangen werden,

- anhand des Empfangssignals ein eine im Empfangssignal enthaltene Amplituden- und Phaseninformation des Empfangssignals als Funktion der zugehörigen Laufzeit wiedergebendes Hilfssignal abgeleitet wird,

- anhand des Hilfssignals eine Laufzeit eines an der Füllgutoberfläche reflektierten Signalanteils als Grundlaufzeit bestimmt wird,

- Laufzeiten von Nulldurchgängen des Hilfssignals bestimmt werden,

- anhand der Laufzeiten der Nulldurchgänge eine Phasendifferenz zwischen dem Sendesignal und dem Empfangssignal bestimmt wird,
- anhand der Phasendifferenz eine Korrektur der gemessenen Grundlaufzeit vorgenommen wird, und
- der Füllstand anhand einer Ausbreitungsgeschwindigkeit der Signalpulse, einer Einbauhöhe der Sende- und Empfangseinrichtung oberhalb des Behälters und der korrigierten Grundlaufzeit bestimmt wird.

Dabei wird die Grundlaufzeit auch hier als Laufzeit eines auf die Reflektion an der Füllgutoberfläche zurück zu führenden Maximums einer Einhüllenden des gleichgerichteten, logarithmierten, gefilterten und digitalisierten Hilfssignals bestimmt wird. Parallel dazu wird die Phasendifferenz zwischen dem gesendeten Signal und dem Empfangssignal anhand des logarithmierten Hilfssignals abgeleitet. Hierzu wird das logarithmierte Hilfssignal über eine Differenzierstufe zwei mal nach der Laufzeit differenziert. Am Ausgang der Differenzierstufe steht damit ein Ausgangssignal zur Verfügung, das ausgeprägte Peaks an den den Nulldurchgängen des Hilfssignals entsprechenden Laufzeiten aufweist. Hierüber können die Laufzeiten der Nulldurchgänge und damit die Phasenlage des Empfangssignals bestimmt werden, ohne dass eine Digitalisierung des Ausgangssignals erforderlich ist, indem die Peak-Amplituden beispielsweise mit Hilfe eines Schmitt-Triggers vereinheitlicht und die zugerhörigen Laufzeiten mit Hilfe eines Timers erfasst werden. Damit steht ein schaltungstechnisch sehr einfach und kostengünstig realisierbares und unter geringem Energieverbrauch ausführbares Verfahren zur Bestimmung der Phasendifferenz zwischen Sende- und Empfangssignal zur Verfügung.

Bei der messtechnischen Erfassung der Phasendifferenz zwischen Sende- und Empfangssignal ergibt sich das Problem, dass die messtechnisch ermittelte Phasenlage des Empfangssignals bzw. des Hilfssignals im unmittelbaren Bezug auf das zugehörige Sendesignal auch bei unverändertem Füllstand von Messzyklus zu Messzyklus geringfügig verschieden sein kann. Ursache für diese Streuung der gemessenen Phasendifferenzen sind schaltungstechnisch und/oder signalverarbeitungstechnisch verursachte Zeitversätze sowohl im unmittelbaren Zeitbezug zwischen Sendesignal und Empfangssignal als auch zwischen dem Empfangsignal und daraus abgeleiteten weiteren Signalen, anhand derer letztendlich die Phasendifferenz bestimmt wird. Dabei ist der Absolutwert eines systematisch auftretenden konstanten Zeitversatzes in der Regel unkritisch, da er durch Referenzmessungen bestimmt und entsprechend kompensiert werden kann.

Demgegenüber können zufällige Schwankungen des Zeitversatzes nicht erfasst und dementsprechend auch nicht kompensiert werden. Sie führen folglich zu einer Einschränkung der erzielbaren Messgenauigkeit mit der die Phasendifferenz und damit natürlich auch der Füllstand bestimmt werden kann.

Eine weitere in der industriellen Messtechnik eingesetzte Messgerätgruppe dieser Art bilden mit Ultraschall nach dem Pulslaufzeit-Verfahren arbeitende Füllstandsmessgeräte. Letztere werden beispielsweise von der Anmelderin unter dem Produktnamen Prosonic vertrieben.

Auch hier werden mittels einer entsprechenden Sende- und Empfangseinrichtung mit einer vorgegebenen Wiederholfrequenz kurze Ultraschallpulse vorgegebener Frequenz und Dauer mittels eines Ultraschallwandlers gesendet und deren zur Sende- und Empfangseinrichtung zurück reflektierten Signalanteile nach einer von der zurückgelegten Wegstrecke abhängigen Laufzeit empfangen. Die Frequenzen der Ultraschallpulse liegen hier in der Regel im Bereich von 1kHz bis 200kHz, so dass eine Zeitdehnung des über den Ultraschallwandler empfangenen Empfangssignals nicht erforderlich ist. Typischer Weise wird hier ein Hilfssignal abgeleitet, das dem verstärkten Empfangssignal entspricht. Abgesehen von diesem in der niedrigeren Signalfrequenz begründeten Unterschied erfolgt die weitere Signalverarbeitung prinzipiell auf die gleiche Weise, wie bei mit Mikrowellen arbeitenden Füllstandsmessgeräten. D. h. auch hier wird das Hilfssignal mittels eines Analog-Digital Wandlers digitalisiert, gegebenenfalls logarithmiert, und es wird eine Hüllkurve abgeleitet, die den Verlauf der Amplituden des Empfangssignals als Funktion der zugehörigen für den Weg von der Sende- und Empfangseinheit zum jeweiligen Reflektor und zurück benötigten Laufzeit wiedergibt. Anhand der Hüllkurve wird auch hier wieder, das auf die Reflektion an der Füllgutoberfläche zurückzuführende Maximum der Hüllkurve bestimmt, und anhand von dessen Laufzeit der Füllstand berechnet.

Es ist eine Aufgabe der Erfindung ein Verfahren und ein Messgerät zur Füllstandmessung nach dem Laufzeitprinzip anzugeben, bei dem die Messung der Laufzeit des auf die Reflektion an der Füllgutoberfläche zurückzuführenden Signalanteils unter Berücksichtigung einer möglichst genau bestimmten, durch den zu messenden Füllstand bedingten, Phasenlage zwischen den Sende- und Empfangsignalen erfolgt.

Hierzu umfasst die Erfindung ein Verfahren gemäß Anspruch 1 zur Messung eines Füllstands eines in einem Behälter befindlichen Füllguts.

Gemäß einer Weiterbildung des Verfahrens

- wird eine Kreuzkorrelation der Phasen-Häufigkeitsverteilung mit einer Referenzverteilung gebildet, und
- die Füllstands-Laufzeit wird anhand einer Laufzeit eines der Grundlaufzeit am nächsten liegende Maximums einer sich auch aus der Kreuzkorrelation ergebenden Verteilung bestimmt.

Gemäß einer weiteren Weiterbildung des Verfahrens

- werden die Häufigkeitswerte der Phasen-Häufigkeitsverteilung mittels eines Mittelwertfilter gefiltert, und
- die Füllstands-Laufzeit wird anhand einer Laufzeit eines der Grundlaufzeit am nächsten liegende Maximums der mittelwert-gefilterten Phasen-Häufigkeitsverteilung bestimmt.

Gemäß einer weiteren Weiterbildung

- wird eine Mittelwertfilterung über die in aufeinander folgenden Messzyklen bestimmten Laufzeiten der Nulldurchgänge der Hilfssignale durchgeführt, und
- die Phasen-Häufigkeitsverteilung wird anhand der aus dieser Mittelwertfilterung für die einzelnen Messzyklen erhaltenen gefilterten Laufzeiten abgeleitet.

Gemäß einer bevorzugten Weiterbildung des Verfahrens

- wird der Laufzeitbereich in diskrete Segmente gleicher Segmentlänge unterteilt,
- es werden in jedem Hilfssignal die Segmente bestimmt, in denen das jeweilige Hilfssignal Nulldurchgänge aufweist, und
- die Phasen-Häufigkeitsverteilung wird als Histogramm aufgezeichnet, dessen Histogrammklassen jeweils einem Segment entsprechen.

Gemäß einer ersten Variante des Verfahrens, wird die Phasen-Häufigkeitsverteilung in jedem Messzyklus anhand der Laufzeiten der Nulldurchgänge der in diesem Messzyklus und der in einer vorgegebenen Anzahl vorangegangener Messzyklen abgeleiteten Hilfsfunktionen bestimmt.
Gemäß einer zweiten Variante des Verfahrens wird die Phasen-Häufigkeitsverteilung fortlaufend aufgezeichnet und in jedem Messzyklus aktualisiert, in dem

- in jedem Messzyklus die Häufigkeiten der im vorangegangenen Messzyklus bestimmten Phasen-Häufigkeitsverteilung mit einem vorgegebenen Abklingfaktor multipliziert werden, und
- die im jeweiligen Messzyklus neu hinzukommenden Laufzeiten der Nulldurchgänge zu den an den entsprechenden Laufzeiten bestehenden um den Abklingfaktor reduzierten Häufigkeiten hinzu gezählt werden.

Gemäß einer Ausgestaltung des Verfahrens gemäß der ersten oder der zweiten Variante ist eine Anzahl von in der Phasen-Häufigkeitsverteilung berücksichtigten Messzyklen anhand einer vorgegebenen zu erwartenden Füllstandsänderungsgeschwindigkeit fest vorgegeben, oder sie wird fortwährend an eine während des Verfahrens gemessene aktuelle Füllstandsänderungsgeschwindigkeit angepasst.
Gemäß einer Weiterbildung des erfindungsgemäßen Verfahrens erfolgt die Aufzeichnung der Phasen-Häufigkeitsverteilung ausschließlich innerhalb eines die im jeweiligen Messzyklus bestimmte Grundlaufzeit umgebenden Laufzeitfensters,

- das sich zu beiden Seiten der Grundlaufzeit über mehrere Referenzperiodendauern erstreckt,
-- wobei die Referenzperiodendauer gleich einer Hälfte eines Kehrwerts einer der Frequenz der Signalpulse im Hilfssignal entsprechenden Frequenz ist, und
- dessen Fensterbreite geringer als eine Breite von auf Reflektionen an der Füllgutoberfläche zurück zu führenden Füllstands-Maxima der Hilfsfunktionen ist.

Gemäß einer Weiterbildung der letztgenannten Weiterbildung

- wird eine zu Beginn des Verfahrens gemessene Grundlaufzeit als Referenzlaufzeit abgespeichert,
- wird anhand dieser Referenzlaufzeit eine Position des Laufzeitfensters entlang einer Laufzeitachse festgelegt,
- wird in jedem Messzyklus überprüft, ob eine Differenz zwischen der in diesem Messzyklus gemessenen Grundlaufzeit und der abgespeicherten Referenzlaufzeit einen vorgegebenen Schwellwert übersteigt, und
- es wird in jedem Messzyklus, in dem die Differenz den Schwellwert übersteigt,

-- die abgespeicherte Referenzlaufzeit durch eine aktualisierte Referenzlaufzeit ersetzt, die gleich der in diesem Messzyklus gemessenen Grundlaufzeit ist, und
-- die Position des Laufzeitfensters anhand der aktualisierten Referenzlaufzeit neu festgelegt.

Gemäß einer Weiterbildung der letztgenannten Weiterbildung ist der Schwellwert in Abhängigkeit von der Laufzeitfensterbreite und der Breite der Füllstands-Maxima der Hilfsfunktion derart bemessen, dass das Laufzeitfenster in jedem Messzyklus einen Laufzeitbereich von einigen Referenzperiodendauern zu beiden Seiten der aktuellen Grundlaufzeit überdeckt.
Gemäß einer Weiterbildung des erfindungsgemäßen Verfahrens wird die Grundlaufzeit in jedem Messzyklus anhand der Laufzeiten der Nulldurchgänge des im jeweiligen Messzyklus abgeleiteten Hilfssignals bestimmt, indem

- Zeitdauern zwischen aufeinander folgenden Nulldurchgängen des Hilfssignals bestimmt werden,
- ein Zeitfenster vorgegebener Länge schrittweise über den gesamten Laufzeitbereichs verschoben wird,
- für jede Position des Zeitfensters eine Häufigkeit bestimmt wird, mit der in dem Zeitfenster Zeitdauern auftreten, deren Länge einer Hälfte einer im Hilfssignal der Frequenz der Signalpulse entsprechenden Periodendauer entspricht,

- eine Perioden-Häufigkeitsverteilung der Häufigkeiten als Funktion von den Positionen des Zeitfensters zugeordneten Laufzeiten bestimmt wird,
- ein auf die Reflektion der Signalpulse an der Füllgutoberfläche zurück zu führendes Maximum der Perioden-Häufigkeitsverteilung bestimmt wird, und
- die Grundlaufzeit anhand einer Laufzeit des Füllstands-Maximums, insb. derjenigen Laufzeit, bei der das Füllstands-Maximum seinen Maximalwert annimmt, oder derjenigen Laufzeit, bei der eine ansteigende oder abfallende Flanke des Füllstands-Maximums einen vorgegebenen Schwellwert über- oder unterschreitet, bestimmt wird.

Gemäß einer Weiterbildung der letztgenannten Weiterbildung

- wird der Laufzeitbereich zur Ableitung der Perioden-Hüllkurve in diskrete Segmente unterteilt,
- ist die Länge des Zeitfensters gleich einer Länge einer vorgegebenen Anzahl von Segmenten,
- wird das Zeitfenster bei der schrittweisen Verschiebung in jedem Schritt um ein Segment verschoben, und
- wird den einzelnen Positionen des Zeitfensters jeweils diejenige Laufzeit zugeordnet, über der sich in der jeweiligen Position eine Fenstermitte des Zeitfensters befindet.

Gemäß einer bevorzugten Ausgestaltung

- sind die Signalpulse periodisch mit der Wiederholfrequenz gesendete Mikrowellenpulse, und
- das Hilfssignal ist ein zeitgedehntes Abbild des Empfangssignals, oder
- die Signalpulse sind periodisch mit der Wiederholfrequenz gesendete Ultraschallpulse.

Weiter umfasst die Erfindung ein Füllstandsmessgerät gemäß Anspruch 14 zur Ausführung des erfindungsgemäßen Verfahrens.
Eine Weiterbildung umfasst ein erfindungsgemäßes Füllstandsmessgerät, bei dem die Mess- und Auswerteeinheit

- einen Gleichrichter zur Gleichrichtung des Hilfssignals,
- eine an den Gleichrichter angeschlossene Differenzierstufe zur Bestimmung einer zweiten Ableitung des gleichgerichteten Hilfssignals nach der Laufzeit,
- eine an die Differenzierstufe angeschlossene Messeinrichtung zur Erfassung von in einem Ausgangssignal der Differenzierstufe auftretenden Peaks und deren Laufzeiten, und

- eine der Messeinrichtung nach geschaltete intelligente elektronische Einheit, insb. einen Mikrocontroller, umfasst.

Die Erfindung und deren Vorteile werden nun anhand der Figuren der Zeichnung, in denen zwei Ausführungsbeispiele dargestellt sind, näher erläutert; gleiche Teile sind in den Figuren mit gleichen Bezugszeichen versehen.

Fig. 1 zeigt:　　eine schematische Darstellung einer Füllstandsmessanordnung mit einem Pulsradar-Füllstandsmessgerät;

Fig. 2 zeigt:　　ein mit dem Füllstandsmessgerät von Fig. 1 abgeleitetes gleichgerichtetes Hilfssignal;

Fig. 3 zeigt:　　einen Amplitudenverlauf eines Hilfssignals bzw. eine formgleiche anhand des Hilfssignals abgeleitete Perioden-Häufigkeitsverteilung als Funktion der Laufzeit;

Fig. 4 zeigt:　　einen Ausschnitt eines gleichgerichteten zweimalig nach der Laufzeit differenzierten Hilfssignals;

Fig. 5 zeigt:　　eine Phasen-Häufigkeitsverteilung zusammen mit einer Amplituden-Hüllkurve bzw. einer Perioden-Häufigkeitsverteilung im Bereich einer Grundlaufzeit; und

Fig. 6 zeigt:　　eine Füllstandsmessanordnung mit einem Ultraschall-Füllstandsmessgerät.

Das erfindungsgemäße Verfahren zur Füllstandsmessung sowie ein zugehöriges Füllstandsmessgerät zur Ausführung dieses Verfahrens ist nachfolgend zunächst am Beispiel eines Pulsradar Füllstandsmessgeräts beschrieben.

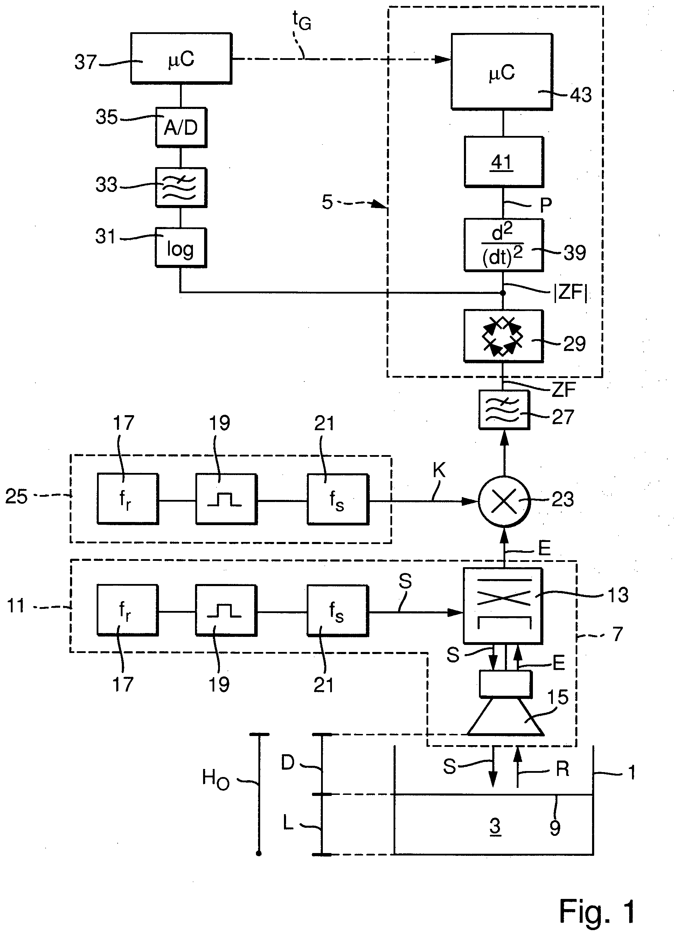

Fig. 1 zeigt hierzu eine schematische Darstellung einer Füllstandsmessanordnung zur Messung eines Füllstands L eines in einem Behälter 1 befindlichen Füllguts 3 mit einem Pulsradar-Füllstandsmessgerät mit einer erfindungsgemäßen Mess- und Auswerteinheit 5.
Das Füllstandsmessgerät umfasst eine Sende- und Empfangsvorrichtung 7, mit der es im Messbetrieb in aufeinander folgenden Messzyklen jeweils ein Sendesignal S in Richtung einer im zu messenden Abstand D von der Sende- und Empfangsvorrichtung 7 befindlichen Füllgutoberfläche 9 sendet. Die Sendesignale S bestehen aus mit einer vorgegebenen Wiederholfrequenz $f_r$ generierten Signalpulsen vorgegebener Frequenz $f_s$ und Dauer.
Die Sende- und Empfangsvorrichtung 7 umfasst einen Sendesignal-Generator 11, der mit der vorgegebenen Wiederholfrequenz $f_r$ Mikrowellenpulse der

vorgegebenen Frequenz $f_s$ generiert und über einen Richtkoppler 13 einer oberhalb der Füllgutoberfläche 9 montierten Antenne 15 zuführt, die das vom Sendesignal-Generator 11 bereitgestellte Sendesignal S in den Behälter 1 sendet.

er Sendesignal-Generator 11 umfasst beispielsweise einen mit der Wiederholfrequenz $f_r$ schwingenden Oszillator 17, dem ein Pulsgenerator 19 nachgeschaltet ist. Der Pulsgenerator 19 erzeugt anhand des Oszillatorsignal ein Steuersignal aus kurzen aufeinander folgenden Rechteckpulsen mit dem eine Mikrowellenquelle 21 angesteuert wird. Die Mikrowellenquelle 21 ist beispielsweise eine Gunn Diode. Sie kann entweder wie hier dargestellt über das hierzu als Triggersignal verwendete Steuersignal entsprechend ein- und ausgeschaltet werden, oder permanent Mikrowellen der vorgegebenen Frequenz $f_s$ erzeugen, die dann einer Torschaltung zugeführt werden, die abhängig vom Steuersignal öffnet oder sperrt.

Im Behälter 1 in Richtung der Sende- und Empfangseinrichtung 7 zurück reflektierte Signalanteile R des Sendesignals S werden von dieser nach einer von deren im Behälter 1 zurückgelegten Wegstrecke abhängigen Laufzeit t über die Antenne 15 als Empfangssignal E empfangen.

In der Sende- und Empfangseinrichtung 7 wird anhand des im jeweiligen Messzyklus empfangenen Empfangssignals E ein Hilfssignal ZF abgeleitet, das eine im Empfangsignal E enthaltende Amplituden- und Phaseninformation des Empfangssignals E als Funktion der zugehörigen Laufzeit t über einen vorgegebenen Laufzeitbereich wiedergibt. Der Laufzeitbereich beginnt in jedem Messzyklus mit einer Startzeit $t_0$, bei der der erste Mikrowellenpuls des Sendesignals S gesendet wird. Die Gesamtdauer des Laufzeitbereichs ist nach oben durch die der Wiederholfrequenz $f_r$ entsprechende Wiederholungsperiodendauer $1/f_r$ begrenzt und kann zusätzlich durch Vorgabe eines maximalen zu messenden Abstands D begrenzt werden.

Das Hilfssignal ZF ist genau wie beim eingangs beschriebenen Stand der Technik auch hier vorzugsweise ein zeitgedehntes Abbild des Empfangssignals E. Das Hilfssignal ZF wird mittels einer Eingangsschaltung erzeugt, in der das Empfangssignal E über den Richtkoppler 13 einem Mischer 23 zugeführt und dort einem geeigneten Referenzsignal K überlagert wird.

Zur Erzielung der gewünschten Zeitdehnung wird als Referenzsignal K ein aus Mikrowellenpulsen bestehendes Signal verwendet, das bezüglich Frequenz und Pulsdauer der Mikrowellenpulse identisch zum Sendesignal S ist, bei dem die Mikrowellenpulse jedoch mit einer Wiederholfrequenz $f_{r'}$ erzeugt werden, die geringfügig kleiner als die Wiederholfrequenz $f_r$ der gesendeten Mikrowellenpulse ist. Das Referenzsignal K wird in dem gezeigten Ausführungsbeispiel mittels eines Referenzsignal-Generators 25 erzeugt, der abgesehen von der geringeren Wiederholfrequenz $f_{r'}$ identisch zu dem Sendesignal-Generator 11 ist.

Dem Mischer 23 ist ein Tiefpassfilter 27 nachgeschaltet, der die gewünschten aufgrund der Zeitdehnung entsprechend niedrigeren Frequenzen des zeitgedehnten Empfangssignals E herausfiltert, und für die höheren Frequenzen des Empfangssignals E undurchlässig ist.

Am Ausgang des Tiefpassfilters 27 steht damit das Hilfssignal ZF zur Verfügung, das gegenüber dem Empfangssignal E um einen Zeitdehnungsfaktor $\alpha$ zeitlich gedehnt ist, der gleich einem Quotienten aus der Sende-Wiederholfrequenz $f_r$ und einer Frequenzdifferenz $\Delta f$ zwischen der Wiederholfrequenz $f_r$ des Sendesignals S und der Wiederholfrequenz $f_{r'}$ des Referenzsignals K ist:

$$\alpha = \frac{f_r}{\Delta f}.$$

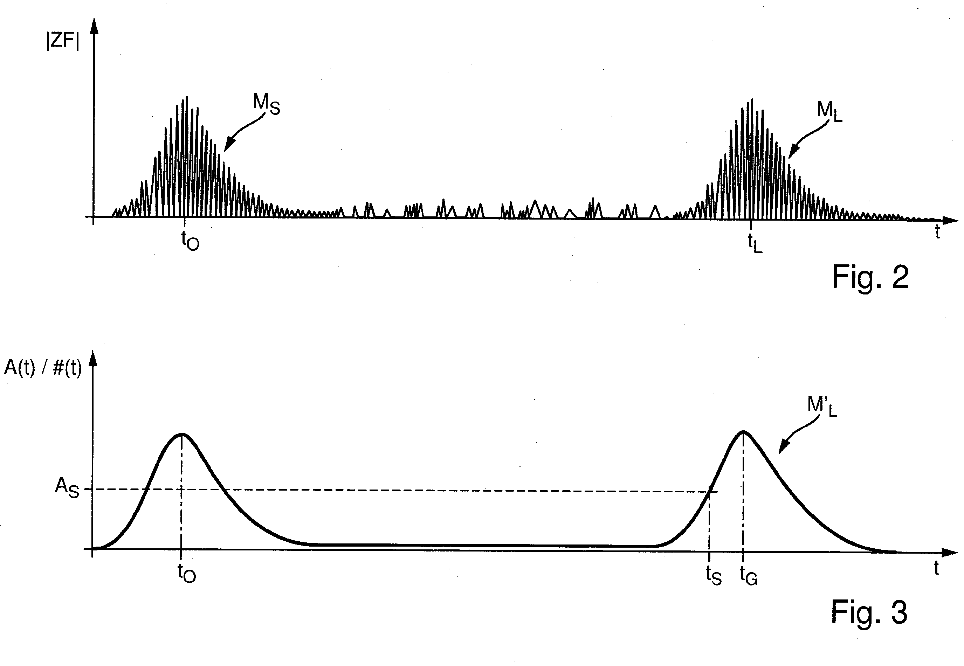

Das Hilfssignal ZF wird der Mess- und Auswerteinheit 5 zugeführt, wo es eingangsseitig mittels eines Gleichrichters 29 gleichgerichtet wird. Fig. 2 zeigt ein zur Erleichterung des Verständnisses stark vereinfachtes Beispiel eines mit der Messanordnung von Fig. 1 abgeleiteten gleichgerichteten Hilfssignals |ZF|. Es weist zwei ausgeprägte Maxima $M_S$, $M_L$ auf. Das erste Maximum $M_S$ ist auf ein Übersprechen des Sendesignals S in der Sende- und Empfangseinrichtung 7 zurückzuführen, über das ein Signalanteil des Sendsignals S unmittelbar über den Mischer 23 zur Mess- und Auswerteinheit 5 übertragen wird.

Das zweite nachfolgend als Füllstands-Maximum $M_L$ bezeichnete Maximum ist auf den an der Füllgutoberfläche 9 reflektierten und nach einer vom Abstand D abhängigen Laufzeit $t_L$ von der Sende- und Empfangseinrichtung 7 empfangenen Signalanteil R des Sendesignals S zurück zu führen.

In einem ersten Verfahrensschritt wird in jedem Messzyklus eine Laufzeit t des an der Füllgutoberfläche 9 reflektierten Signalanteils bestimmt und als Grundlaufzeit $t_G$ abgespeichert.

Dies kann beispielsweise - wie im Stand der Technik üblich - anhand der im Hilfssignal ZF enthalten Amplitudeninformation erfolgen. Ein bekanntes Ausführungsbeispiel hierzu ist in der linken oberen Hälfte von Fig. 1 dargestellt. Dabei wird das gleichgerichtete Hilfssignal |ZF| einer aus einem Logarithmierer 31, einem Tiefpassfilter 33 und einem Analog-Digital Wandler 35 bestehenden Aufbereitungsschaltung zugeführt, deren Ausgangssignal dann einer intelligenten elektronischen Einheit 37, wie z.B. einem Mikrocontroller zugeführt wird. Letztere leitet anhand des Ausgangssignals der Aufbereitungsschaltung eine Fig. 3 dargestellte Amplituden-Hüllkurve A(t) ab, die den Amplitudenverlauf des Hilfssignals ZF, und damit auch des Empfangssignals E in Abhängigkeit von der zugehörigen Laufzeit t wiedergibt. Anschließend wird ein auf die Reflektion an der Füllgutoberfläche 9 zurückzuführendes Füllstands-Maximum $M_L'$

der Amplituden-Hüllkurve A(t) ermittelt, und anhand der Position des Füllstands-Maximums $M_L'$ die Grundlaufzeit $t_G$ bestimmt. Als Grundlaufzeit $t_G$ kann beispielsweise diejenige Laufzeit t verwendet werden, bei der das Füllstands-Maximum $M_L'$ seinen Maximalwert annimmt. Da die Position des Maximalwerts vergleichsweise breiter Maxima nur mit einer gewissen Messunsicherheit bestimmt werden kann, kann alternativ auch zunächst eine Schwellwert-Laufzeit $t_S$ bestimmt werden, bei der - wie hier dargestellt - eine ansteigende oder eine abfallende Flanke des Füllstands-Maximum $M_L'$ einen vorgegebenen Schwellwert $A_S$ über- bzw. unterschreitet, und hieraus anhand von Zusatzinformationen zur Form des Füllstands-Maximum $M_L'$ die Grundlaufzeit $t_G$ bestimmt werden.

Alternativ kann die Grundlaufzeit $t_G$ auf die nachfolgend beschriebene Weise mittels der erfindungsgemäßen Mess- und Auswerteinheit 5 anhand von im Hilfssignal ZF enthaltenen Frequenzinformationen ermittelt werden. Dieses Verfahren ist Gegenstand einer weiteren nahezu zeitgleich eingereichten Patentanmeldung der Anmelderin. Es basiert darauf, dass auf eine Reflektion der gesendeten Signalpulse vorgegebener Frequenz $f_s$ zurückgehende Signalanteile im Empfangssignal E im wesentlichen die gleiche Frequenz $f_s$ aufweisen wie die gesendeten Signalpulse. Dementsprechend bilden sie im Bereich des zugehörigen Füllstands-Maximums $M_L$ des gleichgerichteten Hilfssignal $|ZF|$ Signalanteile mit einer nachfolgend als Referenzperiodendauer $T_R$ bezeichnete Periodendauer aus. Die Referenzperiodendauer $T_R$ ist gleich der Hälfte des Kehrwerts der der Frequenz $f_s$ der Mikrowellenpulse im Hilfssignal ZF entsprechenden Frequenz. Das Hilfssignals ZF weist dementsprechend im Laufzeitbereich des Füllstands-Maximums $M_L$ eine Frequenz auf, die gleich der um den Zeitdehnungsfaktor $\alpha$ reduzierten Frequenz $f_s$ der gesendeten Mikrowellenpulse ist. Entsprechend ist die Referenzperiodendauer $T_R$ dieser Signalanteile im gleichgerichteten Hilfssignal $|ZF|$ durch die Hälfte des Kehrwerts der um den Zeitdehnungsfaktor $\alpha$ reduzierten Frequenz $f_s$ der gesendeten Mikrowellenpulse gegeben:

$$ T_R = \frac{\alpha}{2f_s}. $$

Demgegenüber sind die im Hilfssignal ZF in den außerhalb der Maxima liegenden Bereichen enthaltenen Frequenzen im Wesentlichen auf Rauschen zurückzuführen. Rauschsignale zeichnen sich durch ein breiteres Frequenzspektrum aus, das sich in stark variierenden Periodendauern im Rauschbereich des Hilfssignals ZF wieder spiegelt.

Um hieraus die Grundlaufzeit $t_G$ des auf die Reflektion an der Füllgutoberfläche 9 zurück zu führenden Signalanteils im Hilfssignal ZF bestimmten zu können, werden zunächst anhand der Nulldurchgänge des Hilfssignals ZF die Periodendauern des Hilfssignals ZF in Abhängigkeit von der Laufzeit t bei der sie auftreten bestimmt. Hierzu kann beispielsweise der eingangs erwähnte in der EP 1 324 067 A2 beschriebene Schaltungsaufbau verwendet werden.

Das gleichgerichtete Hilfssignal $|ZF|$ weist bei den Laufzeiten $t_i$, bei denen die Nulldurchgänge des Hilfssignals ZF liegen, jeweils ein Minimum auf. Zur Bestimmung der Laufzeiten $t_i$ dieser Minima wird das gleichgerichtete Hilfssignal $|ZF|$ in der Mess- und Auswerteinheit 5 einer beispielsweise durch einen Bandpass realisierten Differenzierstufe 39 zugeführt, die eine zweimalige Differenzierung des gleichgerichteten Hilfssignals $|ZF|$ nach der Laufzeit t bewirkt. Am Ausgang der Differenzierstufe 39 steht damit ein Ausgangssignal P(t) zur Verfügung, dass die zweimalige Ableitung $|ZF|''$ des gleichgerichteten Hilfssignals $|ZF|$ nach der Laufzeit t gemäß:

$$ |ZF|'' = \frac{d^2}{(dt)^2}|ZF|. $$

als Funktion der Laufzeit t wiedergibt.

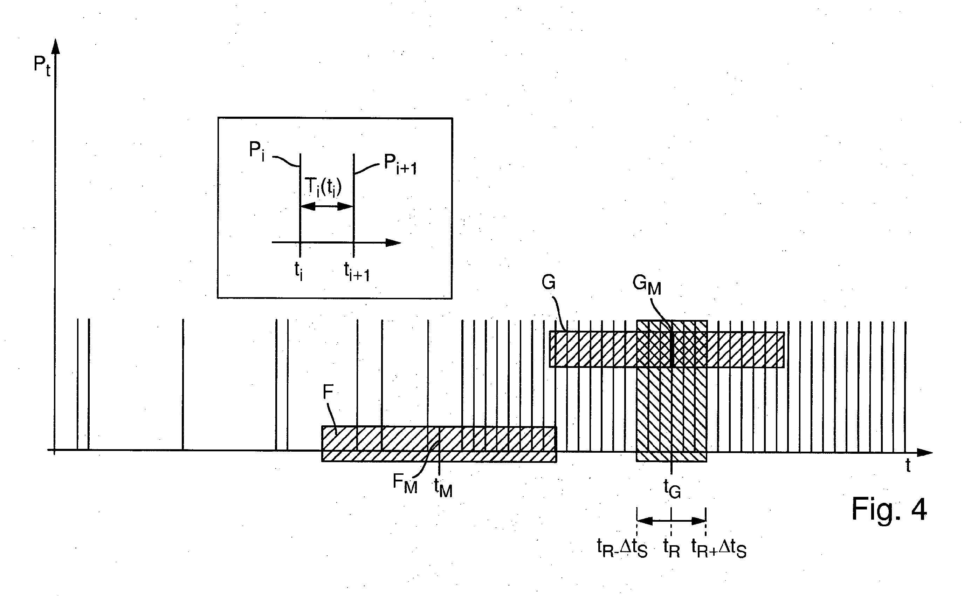

Fig. 4 zeigt ein Beispiel eines Ausschnitts eines in einem Messzyklus abgeleiteten Ausgangssignals P(t) der Differenzierstufe 39, in einem Laufzeitbereich, der einen Teil des Rauschbereichs und den Laufzeitbereich des Füllstands-Maximum $M_L$ des Hilfssignals ZF überdeckt.

Das Ausgangssignal P der Differenzierstufe 39 weist bei allen Laufzeiten $t_i$, bei denen das Hilfssignals ZF einen Nulldurchgang aufweist, einen ausgeprägten Peak $P_i$ auf. Dies ist in der heraus vergrößerten Zusatzdarstellung in Fig. 4 dargestellt.

Das Ausgangssignal P(t) wird einer Messeinrichtung 41 zugeführt, die die Peaks $P_i$ im Ausgangssignal P erkennt und die zugehörigen Laufzeiten $t_i$ bestimmt. Die Messeinrichtung 41 kann im einfachsten Fall beispielsweise einen an eine Zeitmesseinrichtung angebundenen Komparator aufweisen, der immer dann eine Zeitaufzeichnung auslöst, wenn das eingehende Ausgangssignal P einen vorgegebenen Schwellwert überschreitet.

Die Zeitaufzeichnung kann mittels einer internen Uhr erfolgen, die die Zeiten, bei denen die Peaks $P_i$ auftreten, zunächst absolut, d.h. ohne Bezug zur Laufzeit t misst. Die Zuordnung dieser gemessenen Zeiten zu den Laufzeiten t kann dann nachträglich vorgenommen werden, indem die Startzeit $t_0$ in Relation zu der von der Uhr gemessenen Zeit als Offset bestimmt und die Zeitskala insgesamt entsprechend dem eingestellten Zeitdehnungsfaktor $\alpha$ umgerechnet wird.

Alternativ kann der Bezug zwischen der Startzeit $t_0$ und der Zeit der internen Uhr über eine Steuerleitung von der Sende- und Empfangseinrichtung 7 zur Messeinrichtung 41 übertragen werden. Dies geschieht beispielsweise über eine hier nicht dargestellte Steuerung, die der Messeinrichtung 41 den Start des jeweiligen Messzyklusses, während dem das aus periodisch gesendeten Mikrowellenpulsen bestehende Sendesignal S gesendet und durch stroboskopische Abtastung des zugehörigen Empfangssignals E mit dem entsprechenden Referenzsignal K das vorliegende Hilfssignal ZF abgeleitet wurde, gegebenenfalls unter Berücksichtigung einer schaltungs-bedingten Verzögerungszeit, anzeigt.

Die von der Messeinrichtung 41 bestimmten Laufzeiten $t_i$, bei denen die Nulldurchgänge der Hilfsfunktion ZF auftreten, werden zur weiteren Verarbeitung einer intelligenten elektronischen Einheit 43, z.B. einem Mikrocontroller, zugeführt.

In der elektronischen Einheit 43 werden nachfolgend die Zeitdauern $T_i$ von allen zwischen aufeinander folgenden Nulldurchgängen des Hilfssignals ZF liegenden Zeitintervallen bestimmt, und unter Bezug zu der jeweiligen Laufzeit $t_i$, bei der sie auftreten abgespeichert. Jedes Zeitintervall entspricht damit dem zeitlichen Abstand zweier benachbarter Peaks $P_i$, $P_{i+1}$ im Ausgangssignal P.

Wie in der Zusatzdarstellung in Fig. 4 gezeigt, sind die Zeitdauern $T_i$ jeweils gleich der Differenz $t_{i+1} - t_i$ der Laufzeiten $t_{i+1}$, $t_i$, bei denen die entsprechenden beiden benachbarte Peaks $P_i$, $P_{i+1}$ im Ausgangssignal P detektiert wurden. Jeder Zeitdauer $T_i$ wird die Laufzeit $t_i$ zugeordnet, bei der sie auftritt. In dem gezeigten Beispiel ist der Zeitdauer $T_i$ die Laufzeit $t_i$ des früher detektierten Peaks $P_i$ zugeordnet. Alternativ könnte den Zeitdauern $T_i$ die Laufzeit $t_{i+1}$ des jeweils zugehörigen später detektierten Peaks $P_{i+1}$ oder auch ein Mittelwert der Laufzeiten $t_i$, $t_{i+1}$ der beiden zugehörigen Peaks $P_i$, $P_{i+1}$ zugeordnet werden.

Wie aus Fig. 4 ersichtlich sind die Zeitdauern $T_i$ im Laufzeitbereich des Füllstands-Maximums $M_L$ relativ konstant, während die Zeitdauern $T_i$ im Rauschbereich stark variieren.

Für die Bestimmung der Grundlaufzeit $t_G$ wird der von der Hilfsfunktion ZF überdeckte Laufzeitbereich insgesamt in diskrete Segmente gleicher Segmentlänge unterteilt, und ein Zeitfenster F definiert, dessen Länge gleich einem vorgegebenen Vielfachen der Segmentlänge ist.

Alternativ kann der Laufzeitbereich anhand der Laufzeiten $t_i$ der Nulldurchgänge, zwischen denen die Zeitdauern $T_i$ liegen, in Segmente unterschiedlicher Länge unterteilt werden. In dem Fall wird das Zeitfenster dadurch definiert, das es jeweils eine vorgegebene Anzahl n aufeinander folgender Zeitdauern $T_j$ bis $T_{j+n}$ umfasst. Die Länge des Zeitfensters ist in diesem Fall jeweils gleich der Summe der n darin enthaltenen Zeitdauern $T_j$ bis $T_{j+n}$.

Das Zeitfenster F wird in jedem Messzyklus beginnend bei der Startzeit $t_0$ schrittweise über den gesamten Laufzeitbereich verschoben. Dabei wird es in jedem Schritt um ein Segment versetzt. Jeder der dabei von dem Zeitfenster F eingenommenen Positionen entlang der Laufzeitachse t wird eine der eingenommenen Position entsprechende Laufzeit t zugeordnet. Das Zeitfenster F überdeckt in der in Fig. 4 dargestellten Position einen Laufzeitbereich, in dem im Hilfssignal ZF ein Übergang vom Rauschbereich in den Bereich des Füllstands-Maximums $M_L$ vorliegt. Jeder Position des Zeitfensters F ist vorzugsweise jeweils diejenige Laufzeit $t := t_M$ zugeordnet, über der sich in der jeweiligen Position eine Fenstermitte $F_M$ des Zeitfensters F befindet.

Für jede Position, die das Zeitfenster F beim Verschieben entlang der Laufzeitachse t einnimmt, wird jeweils eine Häufigkeit # bestimmt, mit der in dem vom Zeitfenster F in der jeweiligen Position überdeckten Laufzeitbereich Zeitdauern $T_i$ auftreten, deren Länge im Bereich der Referenzperiodendauer $T_R$ liegt. Hierzu wird ein vorzugsweise sehr enger Toleranzbereich +/- $\Delta T$ um die Referenzperiodendauer $T_R$ vorgegeben. Entsprechend werden bei der Häufigkeitsbestimmung alle innerhalb des Zeitfensters F in der jeweiligen Position auftretenden Zeitdauern $T_i$ berücksichtigt, die innerhalb des Toleranzbereichs $T_R$ +/- $\Delta T$ um die Referenzperiodendauer $T_R$ liegen.

Anhand der auf diese Weise bestimmten Häufigkeiten # wird eine Perioden-Häufigkeitsverteilung #(t) abgeleitet, die die Häufigkeiten # als Funktion der den jeweiligen Positionen des Zeitfensters F zugeordneten Laufzeiten $t_M$ bestimmt.

Um Streuungen der Häufigkeitswerte aufeinander folgend aufgezeichneter Perioden-Häufigkeitsverteilung #(t) auszugleichen, werden die auf die oben beschriebene Weise abgeleiteten Perioden-Häufigkeitsverteilungen #(t) vorzugsweise gefiltert.

Hierzu kann zum einen jede einzelne in einem Messzyklus aufgezeichnete Perioden-Häufigkeitsverteilungen #(t) für sich genommen gefiltert werden. Hierzu eignet sich zum Beispiel eine Tiefpassfilterung der Häufigkeitswerte der Perioden-Häufigkeitsverteilung #(t). Die Filterung der Häufigkeitswerte kann beispielsweise mittels eines Filters mit endlicher Impulsantwort (Finite Impulse Response (FIR) -Filter) erster Ordnung ausgeführt werden, und bewirkt insgesamt eine Glättung der Perioden-Häufigkeitsverteilung #(t).

Alternativ oder zusätzlich hierzu kann eine Filterung bezüglich einander entsprechender Häufigkeitswerte von in aufeinander folgenden Messzyklen aufgezeichneten Perioden-Häufigkeitsverteilungen #(t) vorgenommen werden.

Auch hierfür eignet sich ein Tiefpassfilter, insb. ein FIR-Filter. Auch diese Filterung bewirkt insgesamt eine Glättung der gefilterten Perioden-Häufigkeitsverteilungen #(t).

Darüber hinaus kann zusätzlich eine Mittelung über in aufeinander folgenden Messzyklen abgeleitete, vorzugsweise gefilterte, Perioden-Häufigkeitsverteilungen #(t) ausgeführt werden.

Aufgrund der oben beschriebenen, für die im Hilfssignal ZF enthaltenen Frequenzen maßgeblichen Faktoren, stimmt der zeitliche Verlauf der vorzugsweise gefilterten und/oder gemittelten Perioden-Häufigkeitsverteilung #(t) qualitativ mit dem Verlauf der in Fig. 3 dargestellten Amplituden-Hüllkurve A(t) überein. D. h. auf eine Reflektion des Sendesignals S an dem im zu messenden Abstand D von der Sende- und Empfangseinrichtung 7 befindlichen Füllgutoberfläche 9 zurückzuführende Signalanteile im Empfangsignal E bewirken ein ausgeprägtes Füllstands-Maximum $M_L$' in der Perioden-Häufigkeitsverteilung #(t) an der für den Weg zur Füllgutoberfläche 9 und zurück benötigten Laufzeit t. Für die Identifizierung des Füllstands-Maximum $M_L$' und die Bestimmung der zugehörigen Grundlaufzeit $t_G$ können ohne weiteres die für die Auswertung von Amplituden-Hüllkurven bekannten oben beschriebenen Verfahren eingesetzt werden.

Erfindungsgemäß werden zusätzlich zur Grundlaufzeit $t_G$ in jedem Messzyklus die Laufzeiten $t_i$ der Nulldurchgänge des Hilfssignals ZF bestimmt. Die Bestimmung dieser Laufzeiten $t_i$ erfolgt unabhängig von dem für die Bestimmung der Grundlaufzeit $t_G$ gewählten Verfahren auf die oben bereits in Verbindung mit der Bestimmung der Grundlaufzeit $t_G$ anhand der Frequenzinformation beschriebene Weise. D.h. das Hilfssignal ZF wird in jedem Messzyklus der oben beschriebenen Mess- und Auswerteeinheit 5 zugeführt, die hieraus das gleichgerichteten Hilfssignals |ZF| generiert, und daraus durch zweimaliges Differenzieren nach der Laufzeit t das Ausgangssignal P erzeugt, das Peaks $P_i$ an den den Laufzeiten $t_i$ der Nulldurchgänge entsprechenden Laufzeiten t aufweist. Wurde die Grundlaufzeit $t_G$ anhand der Perioden-Häufigkeitsverteilung #(t) bestimmt, so liegen die Laufzeiten $t_i$ der Nulldurchgänge bereits vor und müssen nicht ein zweites mal bestimmt werden.

Grundsätzlich kann - wie in der EP 1 324 067 A2 beschrieben- in jedem einzelnen Messzyklus anhand der Laufzeiten $t_i$ der Nulldurchgänge im Bereich des Füllstands-Maximums $M_L$ eine Phasendifferenz zwischen dem Sende- und dem Empfangssignal S, E bestimmt werden, die dann zur Korrektur der Grundlaufzeit $t_G$ verwendet werden kann. Hier tritt jedoch das eingangs erwähnte Problem der schaltungs- und signalverarbeitungstechnisch bedingten Streuung der gemessenen Phasendifferenzen auf.

Untersuchungen haben ergeben, dass die messtechnisch bedingte Streuung der Phasendifferenzen aufeinander folgender Messzyklen bei unverändertem zu messendem Abstand D im Wesentlichen normalverteilt sind.

Die aus der messtechnisch bedingten Streuung der Phasendifferenzen resultierende Messunsicherheit wird erfindungsgemäß überwunden, indem anhand der Laufzeiten $t_i$ der Nulldurchgänge von in aufeinander folgenden Messzyklen abgeleiteten Hilfssignalen ZF eine Phasen-Häufigkeitsverteilung N(t) als Funktion der Laufzeit t aufgezeichnet wird, die die Häufigkeiten N angibt, mit denen an den jeweiligen Laufzeiten t in den Hilfssignalen ZF der bei der Aufzeichnung berücksichtigten aufeinander folgenden Messzyklen Nulldurchgänge vorgelegen haben.

Die Aufzeichnung der Phasen-Häufigkeitsverteilung N(t) erfolgt vorzugsweise als Histogramm. Hierzu wird der von den Hilfsfunktionen ZF abgedeckte Laufzeitbereich in diskrete Zeitsegmente gleicher Dauer unterteilt, die jeweils einer Histogrammklasse entsprechen. Die Häufigkeiten der einzelnen Histogrammklassen entsprechen somit jeweils der Anzahl der in die entsprechende Histogrammklasse fallenden Nulldurchgänge der berücksichtigten Hilfsfunktionen ZF.

Zeichnet man die Phasen-Häufigkeitsverteilung N(t) bei unverändertem zu messendem Abstand D anhand der Laufzeiten $t_i$ der Nulldurchgänge der Hilfsfunktionen ZF aufeinander folgender Messzyklen j = 1, ..., k auf, so bilden sich in der Phasen-Häufigkeitsverteilung N(t) im Laufzeitbereich des Füllstands-Maximums $M_L$ im Abstand der Referenzperiodendauer $T_R$ aufeinander folgende Normalverteilungen NV aus. Dabei geben die Laufzeiten $t_{NV}$, bei denen im Bereich des Füllstands-Maximums $M_L$ Maxima $NV_{max}$ der Normalverteilungen NV auftreten, den rein physikalisch durch die von den zugehörigen Signalanteilen für die von ihnen zurückgelegte Wegstrecke benötigte Laufzeit bedingten Phasenbezug zwischen den entsprechenden Sende- und Empfangssignalen S, E wieder.

Ändert sich der zu messende Abstand D, so wird dies in der Phasen-Häufigkeitsverteilung N(t) erst dann sichtbar, wenn die Normalverteilungen NV, die sich nun an den dem veränderten Abstand D entsprechenden Laufzeiten t ausbilden, die Normalverteilungen, die sich davor an dem dem vorherigen Abstand D entsprechenden Laufzeiten t ausgebildet hatten, überragen. Um Abstandsänderungen zeitnah erfassen zu können, muss daher die Anzahl aufeinander folgender Messzyklen, über die die Aufzeichnung der Phasen-Häufigkeitsverteilung N(t) erfolgt, begrenzt werden.

Die Phasen-Häufigkeitsverteilung N(t) kann hierzu in jedem Messzyklus anhand der Laufzeiten $t_i$ der Nulldurchgänge der Hilfsfunktionen ZF des aktuellen Messzyklusses und einer vorgegebenen Anzahl k unmittelbar zuvor ausgeführter Messzyklen bestimmt werden. Hierzu werden die Laufzeiten $t_i$ der Nulldurchgänge der Hilfsfunktionen ZF der einzelnen Messzyklen vorzugsweise in einem Ringpuffer abgelegt. Die Häufigkeitsverteilung N(t) basiert damit auf Messdaten aus einem k+1 Messzyklen entsprechenden Zeitraum.

Alternativ kann die Phasen-Häufigkeitsverteilung N(t) fortlaufend aufgezeichnet und in jedem Messzyklus aktualisiert werden. Hierzu werden die Häufigkeiten N der im vorangegangenen Messzyklus bestimmten Phasen-Häufigkeitsverteilung N(t) in jedem Messzyklus mit einem vorgegebenen Abklingfaktor β kleiner eins multipliziert, und die im jeweiligen Messzyklus neu bestimmten Laufzeiten $t_i$ der Nulldurchgänge zu den an den entsprechenden Laufzeiten t bestehenden um den Abklingfaktor β reduzierten Häufigkeiten hinzu gezählt. Die Phasen-Häufigkeitsverteilung N(t) basiert damit auf Messdaten aus einem durch den Wert des Abklingfaktors β vorgegebenen Zeitraum, wobei Messdaten aus vorangegangenen Messzyklen mit zunehmendem Alter an Gewicht verlieren.

Ändert sich der zu messende Abstand D mit der Zeit, so verschiebt sich die Phasen-Häufigkeitsverteilung N(t) entsprechend der Abstandsänderungen entlang der Laufzeitachse. Dabei bestimmt der Messzyklen-Zeitraum, auf dem die abgeleitete Phasen-Häufigkeitsverteilung N(t) basiert, wie schnell sich die Phasen-Häufigkeitsverteilung N(t) sich ändernden zu messenden Abständen anpasst. D.h. je kleiner die Anzahl k+1 der berücksichtigten Messzyklen bzw. je niedriger der Abklingfaktor β ist, umso schneller folgt die Phasen-Häufigkeitsverteilung N(t) dem geänderten Abstand D. Umgekehrt steigen Schwankungen der Phasen-Häufigkeitsverteilungen N(t) umso stärker an, je kleiner die Anzahl k+1, bzw. je niedriger der Abklingfaktor β ist.

Aus der Anzahl k+1 der berücksichtigten Messzyklen bzw. aus dem Abklingfaktor β ergibt sich ein Verzug, der durch den Zeitraum gegeben ist, in dem die Häufigkeiten N der sich an den dem geänderten Abstand D entsprechenden Laufzeiten t ausbildenden Maxima der Phasen-Häufigkeitsverteilung N(t) soweit ansteigen, dass sie die an den dem vorherigen Abstand entsprechenden Laufzeiten noch bestehenden Maxima überragen.

Die Dauer eines Messzyklus ist durch den Kehrwert der Frequenzdifferenz Δf zwischen der Wiederholfrequenz $f_r$ des Sendesignals S und der Wiederholfrequenz $f_{r'}$ des Referenzsignals K gegeben. Bei einer Frequenzdifferenz Δf von 11 Hz ergibt sich eine Messzyklusdauer von 0,09 s.

Berücksichtigt man in der Phasen-Häufigkeitsverteilung beispielsweise 50 aufeinander folgende Messzyklen, so ergibt sich hieraus ein Verzug in der Auswertung in der Größenordnung von ½ x 50 x 0,09 s = 2,25 s.

Die Anzahl k+1 der berücksichtigten Messzyklen bzw. der Abklingfaktor β ist daher in Relation zu einer zu erwartenden Änderungsgeschwindigkeit des Füllstands L im Behälter 1 unter Berücksichtigung der Messzyklusdauer festzulegen.

Ist die zu erwartende Änderungsgeschwindigkeit des Füllstands L gering, so kann zugunsten der Messgenauigkeit ein hohe Anzahl k+1 Messzyklen bzw. ein nahe bei 1 liegender Abklingfaktor β vorgegeben werden. Dies ist beispielsweise in Anwendungen in der Ölindustrie der Fall, wo regelmäßig sehr langsam veränderliche Füllstände in extrem großen Tanks gemessen werden. Da dort geringe Füllstandsänderungen bereits große Volumenänderungen bewirken, ist eine hochgenaue Messung hier besonders vorteilhaft.

Umgekehrt ist bei höheren zu erwartende Änderungsgeschwindigkeiten des Füllstands L eine entsprechend niedrigere Anzahl k+1 bzw. ein entsprechend niedrigerer Abklingfaktor β anzusetzen.

Darüber hinaus ist es vor allem in Anwendungen mit schwankenden Füllstandsänderungsgeschwindigkeiten von Vorteil, die Anzahl k+1 der berücksichtigten Messzyklen bzw. den Abklingfaktor β fortwährend an die im Messbetrieb auftretenden Füllstandsänderungsgeschwindigkeiten anzupassen. Dabei kann die im laufenden Messbetrieb auftretende Füllstandsänderungsgeschwindigkeit jeweils unmittelbar anhand der vom Füllstandsmessgerät ohnehin im aktuellen und in den vorangegangenen Messzyklen gemessenen Füllstände L ermittelt, und die Anzahl k+1 bzw. der Abklingfaktor β entsprechend der aktuellen Füllstandsänderungsgeschwindigkeit nachgeführt werden.

Durch eine entsprechende Dimensionierung der Anzahl k+1 der berücksichtigten Messzyklen bzw. des Abklingfaktors β ist sicher gestellt, dass die Laufzeiten $t_{NV}$ der Maxima $NV_{max}$ der Phasen-Häufigkeitsverteilung N(t) im Laufzeitbereich des Füllstands-Maximums $M_L$ der zuletzt abgeleiteten Hilfsfunktion ZF an den einzelnen Laufzeiten $t_{NV}$ die tatsächlich physikalisch durch den Abstand D zwischen der Sende- und Empfangseinheit 7 und der Füllgutoberfläche 9 bedingten Phasenlagen wiedergeben.

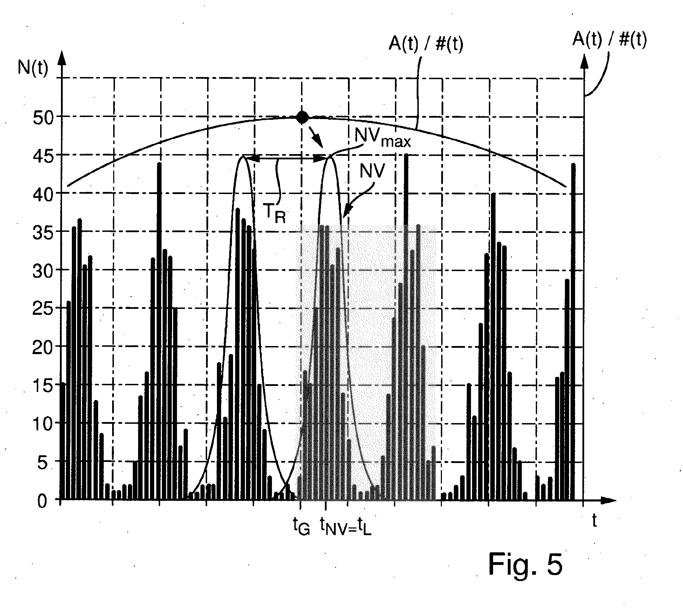

Fig. 5 zeigt hierzu ein Beispiel einer Phasen-Häufigkeitsverteilung N(t) zusammen mit der zugehörigen aktuellen Amplituden-Hüllkurve A(t) bzw. der zugehörigen formgleichen Perioden-Häufigkeitsverteilung #(t) im Laufzeitbereich der zugehörigen aktuellen Grundlaufzeit $t_G$.

Wie in Fig. 5 durch einen Pfeil dargestellt, wird in jedem Messzyklus die Laufzeit $t_{NV}$ des der Grundlaufzeit $t_G$ am nächsten liegenden Maximums $NV_{max}$ der aktuellen Phasen-Häufigkeitsverteilung N(t) als Füllstands-Laufzeit $t_L$ bestimmt, und hieraus der Füllstand L bestimmt.

Dazu wird zunächst anhand der Ausbreitungsgeschwindigkeit c der Signalpulse und der Füllstands-Laufzeit $t_L$ der Abstand D zwischen der Sende- und Empfangsvorrichtung 7 gemäß:

$$D = \tfrac{1}{2}\, c\, t_L$$

bestimmt. Anhand des Abstands D und der Einbauhöhe $H_0$ der Sende- und Empfangseinrichtung 7 über dem Behälter 1 ergibt sich hieraus der zu messende Füllstand L gemäß:

$$L = H_0 - D.$$

Da die Phasen-Häufigkeitsverteilung N(t) ausschließlich in der Umgebung der Grundlaufzeit $t_G$ benötigt wird genügt es hierfür die Nulldurchgänge des Hilfssignals ZF in jedem Messzyklus ausschließlich in einem in Fig. 4 dargestellten die Grundlaufzeit $t_G$ umgebenden Laufzeitfenster G zu erfassen und abzuspeichern. Das Laufzeitfenster G umgibt die Grundlaufzeit $t_G$ vorzugsweise symmetrisch. Darüber hinaus ist es vorzugsweise derart bemessen, das es vollständig im Laufzeitbereich des Füllstands-Maximums $M_L$ des Hilfssignals ZF liegt, und sich zu beiden Seiten der Grundlaufzeit $t_G$ über mehrere Referenzperiodendauern $T_R$ erstreckt. Hierzu wird eine Laufzeitfensterbreite vorgegeben, die mehrere Referenzperiodendauern $T_R$ kleiner als der von den Füllstands-Maxima $M_L$ überdeckte Laufzeitbereich ist.

Bei einem Sendesignal S aus mit einer Wiederholfrequenz $f_r$ von 1,8 MHz gesendeten Mikrowellenpulsen mit einer Frequenz $f_S$ von 26 GHz und einer Pulsdauer von 800 ps umfasst ein Mikrowellenpuls 20 Perioden. Entsprechend umfasst das Füllstands-Maximum $M_L$ des gleichgerichteten Hilfssignals |ZF| etwa 40 Referenzperiodendauern $T_R$. Hier kann beispielsweise ein symmetrisch zur Grundlaufzeit $t_G$ angeordnetes Laufzeitfenster G mit einer Fensterbreite von 20 Referenzperiodendauern $T_R$ eingesetzt werden. Bei einer Frequenzdifferenz $\Delta f$ zwischen der Wiederholfrequenz $f_r$ des Sendesignals S und der Wiederholfrequenz $f_{r'}$ des Referenzsignals K von 11 Hz ergibt sich ein Zeitdehnungsfaktor $\alpha = f_r / \Delta f$ von 1,6 $10^{-5}$ und damit eine Referenzperiodendauer $T_R$ von 3 µs. Ein Laufzeitfenster G mit eine Fensterbreite von 20 Referenzperiodendauern $T_R$ überdeckt damit entlang der zeitgedehnten Laufzeitachse einen Laufzeitbereich [$t_G$ - 10 $T_R$; $t_G$ + 10 $T_R$] von 60 µs.

Grundsätzlich ist es möglich die Position des Laufzeitfenster G in jedem Messzyklus anhand der aktuell in diesem Messzyklus bestimmten Grundlaufzeit $t_G$ neu festzulegen. Damit wäre die Position des Laufzeitfensters G jedoch unmittelbar den gleichen Schwankungen unterworfen, wie die Grundlaufzeit $t_G$.

Jede Verschiebung des Laufzeitfensters G entlang der Laufzeitachse bedeutet jedoch, dass die für die Häufigkeitsverteilung N(t) benötigten Messdaten vorangegangener Messzyklen im Histogramm der neuen Position des Laufzeitfensters G zugeordnet werden müssen. Wird das Laufzeitfenster G beispielsweise um zwei Histogrammklassenbreiten nach links verschoben, so muss jetzt die dritte Histogrammklasse der Laufzeit zugeordnet werden, der zuvor die erste Histogrammklasse zugeordnet war. Ist für jede Histogrammklasse ein Speicherplatz für die Speicherung der Anzahl der in dieser Klasse bisher aufgetretenen Nulldurchgänge vorgesehen, so bedeutet eine Verschiebung um zwei Histogrammklassenbreiten nach links, dass die an den einzelnen Speicherplätzen gespeicherten Häufigkeiten jeweils auf einen zwei Speicherplätze weiter rechts liegenden Speicher umkopiert werden müssen.

Um diesen Aufwand zu vermeiden wird vorzugsweise eine Hysterese vorgesehen, durch die Verschiebungen des Laufzeitfensters G auf ein zur Abstandsmessung von veränderlichen Abständen D notweniges Maß reduziert werden.

Dabei wird die zu Beginn des Verfahrens in einem Messzyklus gemessene Grundlaufzeit $t_G$ als Referenzlaufzeit $t_R$ für die Festlegung der Position des Laufzeitfensters G entlang der Laufzeitachse t abgespeichert. Nun wird das Laufzeitfenster G derart positioniert und bemessen, dass dessen Fenstermitte $G_M$ auf der Referenzlaufzeit $t_R$ liegt, und sich das Laufzeitfenster G zu beiden Seiten der Referenzlaufzeit $t_R$ über eine vorgegebene Anzahl von Referenzperiodendauern $T_R$ erstreckt.

Bei einer Laufzeitfensterbreite, bei der der vom Laufzeitfenster G insgesamt überdeckte Laufzeitbereich mehrere Referenzperiodendauern $T_R$ geringer als der von den Füllstands-Maxima $M_L$ überdeckte Laufzeitbereich ist, ist hierdurch sichergestellt, dass sich das Laufzeitfenster G auch dann noch vollständig im Bereich des aktuellen Füllstands-Maximum $M_L$ befindet, wenn sich der zu messende Abstand D während der unmittelbar nachfolgenden Messzyklen um eine Distanz $\Delta D$ ändert, der eine Änderung $\Delta t_G$ der Grundlaufzeit $t_G$ um einige Referenzperiodendauern $T_R$ bewirkt.

In den nachfolgenden Messzyklen wird jeweils erneut die Grundlaufzeit $t_G$ gemessen, und eine Differenz zwischen der aktuellen Grundlaufzeit $t_G$ und der abgespeicherten Referenzlaufzeit $t_R$ bestimmt.

Eine Anpassung der Position des Laufzeitfensters G an die im jeweiligen Messzyklus gemessene Grundlaufzeit $t_G$ wird jedoch nur dann vorgenommen, wenn die Differenz zwischen der aktuellen Grundlaufzeit $t_G$ und der abgespeicherten Referenzlaufzeit $t_R$ einen vorgegebenen Schwellwert $\Delta t_S$ überschreitet. Ist das der Fall, wird die abgespeicherte Referenzlaufzeit $t_R$ durch die aktuelle Grundlaufzeit $t_G$ ersetzt, und das Laufzeitfenster G anhand der aktualisierten Referenzlaufzeit $t_R$ positioniert.

Durch den Schwellwert $\Delta t_S$ ist bezüglich der Anpassung der Position des Laufzeitfensters G ein - in Fig. 4 grau hinterlegter- Hysteresebereich der Breite +/- $\Delta t_S$ um die jeweils vorliegende Referenzlaufzeit $t_R$ vorgegeben. D.h. das Laufzeitfenster G wird erst dann entsprechend der aktuelle Grundlaufzeit $t_G$ angepasst, wenn diese den Hysteresebereich [$t_R$ - $\Delta t_S$; $t_R$ + $\Delta t_S$] verlässt.

Dabei ist der Schwellwert $\Delta t_S$ in Abhängigkeit von der Laufzeitfensterbreite und der Breite der Füllstands-Maxima $M_L$ so zu bemessen, dass das Laufzeitfenster G in jedem Messzyklus einen Laufzeitbereich von einigen Referenzperiodendauern $T_R$ zu beiden Seiten der aktuellen Grundlaufzeit $t_G$ überdeckt.

So kann bei dem oben genannten Beispiel von Füllstands-Maxima $M_L$ mit einer Breite von 40 Referenzperiodendauern $T_R$ und einer Fensterbreite von 20 Referenzperiodendauern $T_R$ beispielsweise ein Schwellwert $\Delta t_S$ in der Größenordnung von drei Referenzperiodendauern $T_R$ verwendet werden. Damit kann die aktuelle Referenzlaufzeit $t_R$ bis zu drei Referenzperiodendauern $T_R$ aus der Fenstermitte $G_M$ heraus wandern, bevor das Laufzeitfenster G verschoben wird. Auch bei maximaler Exzentrizität liegen dann auf jeder Seite der aktuellen Referenzlaufzeit $t_R$ noch mindestens 7 Referenzperiodendauern $T_R$.

Der Verlauf der aufgezeichneten Phasen-Häufigkeitsverteilung N(t) entspricht unter idealen Bedingungen einer Aneinanderreihung von identischen Normalverteilungen NV. Ideale Bedingungen liegen dann vor, wenn die Phasen-Häufigkeitsverteilung N(t) über eine große Anzahl aufeinander folgender Messzyklen hinweg aufgezeichnet wird, und der zu messende Abstand D während dieser Messzyklen konstant ist.

Unter realen Bedingungen, d.h. bei einer begrenzten Anzahl von bei der Aufzeichnung der Phasen-Häufigkeitsverteilung N(t) berücksichtigten Messzyklen und veränderlichem zu messendem Abstand D treten Abweichungen der Phasen-Häufigkeitsverteilung N(t) von den ideal identischen aufeinander folgenden Normalverteilungen auf, die zu einer Messunsicherheit bei der Bestimmung der Laufzeiten $t_{NV}$ der Maxima $NV_{max}$ der Phasen-Häufigkeitsverteilung N(t) führen.

Dieser Messunsicherheit kann zum einen dadurch entgegengewirkt werden, dass eine Kreuzkorrelation der abgeleiteten Phasen-Häufigkeitsverteilung N(t) mit einer auf der Idealform der Normalverteilungen basierten Referenzverteilung ausgeführt wird. Die Referenzverteilung besteht damit aus einer Normalverteilung oder aus periodisch mit der Referenzperiodendauer $T_R$ aufeinander folgenden Normalverteilungen mit einem Erwartungswert von Null und einer vorgegebenen Standardabweichung. Als Standardabweichung der Normalverteilungen der Referenzverteilung wird vorzugsweise eine mittlere Standardabweichung der in der abgeleiteten Phasen-Häufigkeitsverteilung N(t) periodisch mit der Referenzperiodendauer $T_R$ auftretenden Verteilungen vorgegeben.

Alternativ kann eine Mittelwertfilterung der Häufigkeiten N der Phasen-Häufigkeitsverteilung N(t) ausgeführt werden. Dabei werden die einzelnen Häufigkeitswerte jeweils durch einen Mittelwert der innerhalb eines Filterfensters vorgegebener Breite um die zugehörige Laufzeit auftretenden Häufigkeitswerte ersetzt. Mittelwertfilterung normalverteilter Daten bewirkt eine Reduzierung der Standardabweichung bei gleichzeitigem Erhalt des jeweiligen Mittelwerts.

Eine weitere Alternative besteht darin, eine Mittelwertfilterung über die in aufeinander folgenden Messzyklen bestimmten Laufzeiten $t_i$ der Nulldurchgänge der Hilfssignale ZF durchzuführen, und die Phasen-Häufigkeitsverteilung N(t) anhand der hieraus für die einzelnen Messzyklen erhaltenen gefilterten Laufzeiten aufzuzeichnen. Auch hierdurch wird eine Reduzierung der Standardabweichung bei gleichzeitigem Erhalt des jeweiligen Mittelwerts bewirkt.

Im Anschluss wird die Füllstands-Laufzeit $t_L$ als Laufzeit des der im jeweiligen Messzyklus bestimmten Grundlaufzeit $t_G$ am nächsten liegenden Maximums der aus der Kreuzkorrelation bzw. aus der Mittelwertfilterung erhaltenen Verteilung ermittelt, und hieraus der Füllstand L bestimmt.

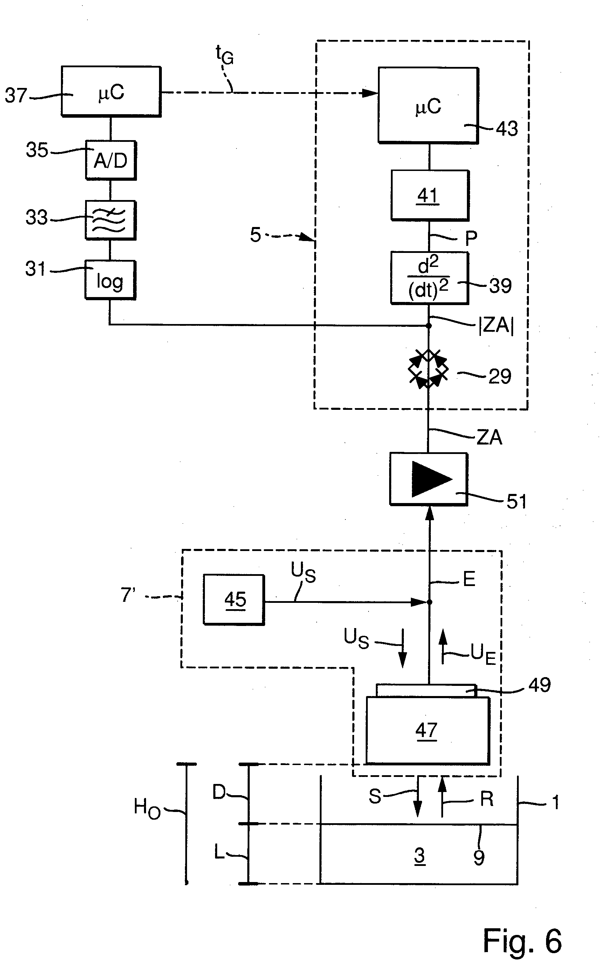

Das erfindungsgemäße Abstandsmessverfahren ist völlig analog auch in mit Ultraschall nach dem Laufzeitprinzip arbeitenden Füllstandsmessgeräten einsetzbar. Fig. 6 zeigt eine schematische Darstellung einer Füllstandsmessanordnung mit einem Ultraschall-Füllstandsmessgerät mit der erfindungsgemäßen Mess- und Auswerteinheit 5.

Auch hier ist eine oberhalb des mit dem Füllgut 3 befüllten Behälters 1 angeordnete Sende- und Empfangseinrichtung 7' vorgesehen mittels der aus mit einer vorgegebenen Wiederholrate $f_r$ gesendeten kurzen Ultraschallpulsen vorgegebener Frequenz $f_s$ und Dauer bestehende Sendesignale S in Richtung des Füllguts 3 gesendet, und deren an der Füllgutoberfläche 9 reflektierten Signalanteile R nach einer von der zurückgelegten Wegstrecke abhängigen Laufzeit t empfangen werden. Hierzu umfasst die Sende- und Empfangseinrichtung 7' einen Sendesignal-Generator 45, der ein dem Sendesignal S entsprechendes elektrisches Wechselspannungssignal $U_S$ erzeugt, das einem hier als Sende- und als Empfangswandler eingesetzten Ultraschallwandler 47 zugeführt wird. Kernstück des Ultraschallwandler 47 ist beispielsweise ein piezoelektrisches Element, das das über eine Elektrode 49 daran anliegende Wechselspannungssignal $U_S$ in ein Ultraschallsignal umwandelt und als Sendesignal S aussendet. Umgekehrt werden im Behälter 1 reflektierte Signalanteile vom Ultraschallwandler 47 empfangen und in ein entsprechendes Wechselspannungssignal $U_E$ umgewandelt, das dann am Ultraschallwandler 47 als elektrisches Empfangssignal E abgegriffen wird. Die weitere Verarbeitung und Auswertung des Empfangssignals E erfolgt auf die oben beschriebene Weise, wobei jedoch aufgrund der deutlich niedrigeren Frequenzen $f_r$ der Ultraschallimpulse eine Zeitdehung des Empfangsignals E nicht erforderlich ist. Entsprechend wird das Empfangssignal E hier lediglich einem Verstärker 51 zugeführt, der hieraus ein Hilfssignal ZA generiert, das dem verstärkten Empfangssignal E entspricht.

Auch hier wird in jedem Messzyklus jeweils ein Hilfssignal ZA generiert, das dann auf die oben bereits in Verbindung mit dem mit Mikrowellen arbeitenden Füllstandsmessgerät beschriebene Art und Weise weiter verarbeitet wird.

Es wird in jedem Messzyklus anhand des Hilfssignals ZA eine Laufzeit t des an der Füllgutoberfläche 9 reflektierten Signalanteils als Grundlaufzeit $t_G$ bestimmt. Dies kann genau wie bei dem mit Mikrowellen arbeitenden Füllstandsmessgerät anhand einer aus dem gleichgerichteten, logarithmierten, gefilterten und analog-digital gewandelten Hilfssignals ZA mittels der intelligenten elektronischen Einheit 37 abgeleiteten Amplituden-Hüllkurve A(t) oder anhand der mit der oben beschriebenen Mess- und Auswerteschaltung 5 auf die oben beschriebene Weise abgeleiteten Perioden-Häufigkeitsverteilung #(t) erfolgen. Da aufgrund der niedrigeren Frequenzen $f_S$ der Ultraschallpulse keine Zeitdehnung des Empfangssignals E erforderlich ist, ist die Referenzperiodendauer $T_R$ hier gleich der Hälfte des Kehrwerts der Frequenz $f_S$ der gesendeten Ultraschallpulse.

Genau wie bei dem zuvor beschriebenen Ausführungsbeispiel, werden auch hier in jedem Messzyklus auf die oben beschriebene Weise die Laufzeiten $t_i$ der

Nulldurchgängen des Hilfssignals ZA bestimmt, und es wird anhand der im jeweils aktuellen und in mehreren vorangegangenen Messzyklen bestimmten Laufzeiten $t_i$ der Nulldurchgänge der Hilfssignale ZA eine Phasen-Häufigkeitsverteilung N(t) abgeleitet, die Häufigkeiten angibt, mit denen an den jeweiligen Laufzeiten t in den entsprechenden Hilfssignalen ZA Nulldurchgänge vorlagen.

Auch hier wird in jedem Messzyklus die Laufzeit $t_{NV}$ des der Grundlaufzeit $t_G$ am nächsten liegenden Maximums $NV_{max}$ der Phasen-Häufigkeitsverteilung N(t) als Füllstands-Laufzeit $t_L$ bestimmt, und anhand der Ausbreitungsgeschwindigkeit der Signalpulse, der Einbauhöhe $H_0$ der Sende- und Empfangsvorrichtung 7' und der Füllstands-Laufzeit $t_L$ der Füllstand L bestimmt.

| | |
|---|---|
| 1 | Behälter |
| 3 | Füllgut |
| 5 | Mess- und Auswerteeinheit |
| 7 | Sende- und Empfangsvorrichtung |
| 9 | Reflektor |
| 11 | Sendesignal-Generator |
| 13 | Richtkoppler |
| 15 | Antenne |
| 17 | Oszillator |
| 19 | Pulsgenerator |
| 21 | Mikrowellenquelle |
| 23 | Mischer |
| 25 | Referenzsignal-Generator |
| 27 | Tiefpassfilter |
| 29 | Gleichrichter |
| 31 | Logarithmierer |
| 33 | Tiefpassfilter |
| 35 | Analog-Digital Wandler |
| 37 | intelligente elektronische Einheit |
| 39 | Differenzierstufe |
| 41 | Messeinrichtung |
| 43 | intelligente elektronische Einheit |
| 45 | Sendesignal-Generator |
| 47 | Ultraschallwandler |
| 49 | Elektrode |
| 51 | Verstärker |

**Patentansprüche**

1. Verfahren zur Messung eines Füllstands (L) eines in einem Behälter (1) befindlichen Füllguts (3), bei dem in aufeinanderfolgenden Messzyklen jeweils

    - mittels einer Sende- und Empfangseinrichtung (7, 7') mit einer vorgegebenen Wiederholfrequenz ($f_r$) Signalpulse vorgegebener Frequenz ($f_s$) in den Behälter (1) gesendet, und deren im Behälter (1) in Richtung der Sende- und Empfangseinrichtung (7, 7') zurück reflektierten Signalanteile (R) nach einer von deren zurückgelegten Wegstrecke abhängigen Laufzeit (t) als Empfangssignal (E) empfangen werden,

    - anhand des Empfangssignal (E) ein eine im Empfangssignal (E) enthaltene Amplituden- und Phaseninformation des Empfangssignals (E) als Funktion der zugehörigen Laufzeit (t) wiedergebendes Hilfssignal (ZF, ZA) über einen vorgegebenen Laufzeitbereich abgeleitet wird,

    - anhand des Hilfssignals (ZF) eine Laufzeit (t) eines an einer Füllgutoberfläche (9) reflektierten Signalanteils als Grundlaufzeit ($t_G$) bestimmt wird,

    - Laufzeiten ($t_i$) von Nulldurchgängen des Hilfssignals (ZF, H) bestimmt werden,

    - anhand der im aktuellen und in mehreren vorangegangenen Messzyklen bestimmten Laufzeiten ($t_i$) der Nulldurchgänge der Hilfssignale (ZF, ZA) eine Phasen-Häufigkeitsverteilung (N(t)) als Funktion der Laufzeit (t) abgeleitet wird, die Häufigkeiten angibt, mit denen an den jeweiligen Laufzeiten (t) in den zugehörigen Hilfssignalen (ZF, H) Nulldurchgänge vorlagen,

    - eine Laufzeit ($t_{NV}$) eines der Grundlaufzeit ($t_G$) am nächsten liegenden Maximums ($NV_{max}$) der Häufigkeitsverteilung (N(t)) als Füllstands-Laufzeit ($t_L$) bestimmt wird, und

    - der Füllstand (L) anhand einer Ausbreitungsgeschwindigkeit der Signalpulse, einer Einbauhöhe ($H_0$) der Sende- und Empfangseinrichtung (7, 7') oberhalb des Behälters (1) und der Füllstands-Laufzeit ($t_L$) bestimmt wird.

2. Verfahren nach Anspruch 1, bei dem

    - eine Kreuzkorrelation der Phasen-Häufigkeitsverteilung (N(t)) mit einer Referenzverteilung gebildet wird, und

    - die Füllstands-Laufzeit ($t_L$) anhand einer Laufzeit eines der Grundlaufzeit ($t_G$) am nächsten liegende Maximums einer sich auch aus der Kreuzkorrelation ergebenden Verteilung bestimmt wird.

3. Verfahren nach Anspruch 1, bei dem

    - die Häufigkeitswerte der Phasen-Häufigkeitsverteilung (N(t)) mittels eines Mittelwertfilter gefiltert werden, und

    - die Füllstands-Laufzeit ($t_L$) anhand einer Laufzeit eines der Grundlaufzeit ($t_G$) am nächsten liegende Maximums der mittelwert-gefilterten Phasen-Häufigkeitsverteilung bestimmt wird.

4. Verfahren nach Anspruch 1, bei dem

    - eine Mittelwertfilterung über die in aufeinander folgenden Messzyklen bestimmten Laufzeiten ($t_i$) der Nulldurchgänge der Hilfssignale (ZF) durchgeführt wird, und

- die Phasen-Häufigkeitsverteilung (N(t)) anhand der aus dieser Mittelwertfilterung für die einzelnen Messzyklen erhaltenen gefilterten Laufzeiten abgeleitet wird.

5. Verfahren nach Anspruch 1, bei dem

- der Laufzeitbereich in diskrete Segmente gleicher Segmentlänge unterteilt wird,
- in jedem Hilfssignal (ZF, ZA) die Segmente bestimmt werden in denen das jeweilige Hilfssignal (ZF, ZA) Nulldurchgänge aufweist, und
- die Phasen-Häufigkeitsverteilung (N(t)) als Histogramm aufgezeichnet wird, dessen Histogrammklassen jeweils einem Segment entsprechen.

6. Verfahren nach Anspruch 1, bei dem die Phasen-Häufigkeitsverteilung (N(t)) in jedem Messzyklus anhand der Laufzeiten ($t_i$) der Nulldurchgänge der in diesem Messzyklus und der in einer vorgegebenen Anzahl (k) vorangegangener Messzyklen abgeleiteten Hilfsfunktionen (ZF, ZA) bestimmt wird.

7. Verfahren nach Anspruch 1, bei dem die Phasen-Häufigkeitsverteilung (N(t)) fortlaufend aufgezeichnet und in jedem Messzyklus aktualisiert wird, in dem

- in jedem Messzyklus die Häufigkeiten der im vorangegangenen Messzyklus bestimmten Phasen-Häufigkeitsverteilung (N(t)) mit einem vorgegebenen Abklingfaktor ($\beta$) multipliziert werden, und
- die im jeweiligen Messzyklus neu hinzukommenden Laufzeiten ($t_i$) der Nulldurchgänge zu den an den entsprechenden Laufzeiten (t) bestehenden um den Abklingfaktor ($\beta$) reduzierten Häufigkeiten hinzu gezählt werden.

8. Verfahren nach Anspruch 6 oder 7, bei dem eine Anzahl von in der Phasen-Häufigkeitsverteilung (N(t)) berücksichtigten Messzyklen anhand einer vorgegebenen zu erwartenden Füllstandsänderungsgeschwindigkeit fest vorgegeben ist, oder fortwährend an eine während des Verfahrens gemessene aktuelle Füllstandsänderungsgeschwindigkeit angepasst wird.

9. Verfahren nach Anspruch 1, bei dem die Aufzeichnung der Phasen-Häufigkeitsverteilung (N(t)) ausschließlich innerhalb eines die im jeweiligen Messzyklus bestimmte Grundlaufzeit ($t_G$) umgebenden Laufzeitfensters (G) erfolgt,

- das sich zu beiden Seiten der Grundlaufzeit ($t_G$) über mehrere Referenzperiodendauern ($T_R$) erstreckt,

- wobei die Referenzperiodendauer ($T_R$) gleich einer Hälfte eines Kehrwerts einer der Frequenz ($f_s$) der Signalpulse im Hilfssignal (ZF, ZA) entsprechenden Frequenz ist, und
- dessen Fensterbreite geringer als eine Breite von auf Reflektion an der Füllgutoberfläche (9) zurück zu führenden Füllstands-Maxima ($M_L$) der Hilfsfunktionen (ZF, ZA) ist.

10. Verfahren nach Anspruch 9, bei dem

- eine zu Beginn des Verfahrens gemessene Grundlaufzeit ($t_G$) als Referenzlaufzeit ($t_R$) abgespeichert wird,
- anhand dieser Referenzlaufzeit ($t_R$) eine Position des Laufzeitfensters (G) entlang einer Laufzeitachse festgelegt wird,
- in jedem Messzyklus überprüft wird, ob eine Differenz zwischen der in diesem Messzyklus gemessenen Grundlaufzeit ($t_G$) und der abgespeicherten Referenzlaufzeit ($t_R$) einen vorgegebenen Schwellwert ($\Delta t_S$) übersteigt, und
- in jedem Messzyklus, in dem die Differenz den Schwellwert ($\Delta t_S$) übersteigt,
- die abgespeicherte Referenzlaufzeit ($t_R$) durch eine aktualisierte Referenzlaufzeit ($t_R$) ersetzt wird, die gleich der in diesem Messzyklus gemessenen Grundlaufzeit ($t_G$) ist, und
-- die Position des Laufzeitfensters (G) anhand der aktualisierten Referenzlaufzeit ($t_R$) neu festgelegt wird,

wobei der Schwellwert ($\Delta t_S$) inAbhängigkeit von der Laufzeitfensterbreite und der Breite der Füllstands-Maxima ($M_L$) der Hilfsfunktion (ZF, ZA) derart bemessen ist, dass das Laufzeitfenster (G) in jedem Messzyklus einen Laufzeitbereich von einigen Referenzperiodendauern ($T_R$) zu beiden Seiten der aktuellen Grundlaufzeit ($t_G$) überdeckt.

11. Verfahren nach Anspruch 1, bei dem die Grundlaufzeit ($t_G$) in jedem Messzyklus anhand der Laufzeiten ($t_i$) der Nulldurchgänge des im jeweiligen Messzyklus abgeleiteten Hilfssignals (ZF, ZA) bestimmt wird, indem

- Zeitdauern ($T_i$) zwischen aufeinander folgenden Nulldurchgängen des Hilfssignals (ZF, ZA) bestimmt werden,
- ein Zeitfenster (F) vorgegebener Länge schrittweise über den gesamten Laufzeitbereichs verschoben wird,
- für jede Position des Zeitfensters (F) eine Häufigkeit (#) bestimmt wird, mit der in dem Zeitfenster (F) Zeitdauern ($T_i$) auftreten, deren Länge einer Hälfte einer im Hilfssignal (ZF, ZA) der

Frequenz ($f_s$) der Signalpulse entsprechenden Periodendauer entspricht,

- eine Perioden-Häufigkeitsverteilung (#(t)) der Häufigkeiten (#) als Funktion von den Positionen des Zeitfensters (F) zugeordneten Laufzeiten (t) bestimmt wird,

- ein auf die Reflektion der Signalpulse an der Füllgutoberfläche (9) zurück zu führendes Maximum ($M_L$') der Perioden-Häufigkeitsverteilung (#(t)) bestimmt wird, und

- die Grundlaufzeit ($t_G$) anhand einer Laufzeit (t) des Füllstands-Maximums ($M_L$'), insb. derjenigen Laufzeit (t), bei der das Füllstands-Maximum ($M_L$') seinen Maximalwert annimmt, oder derjenigen Laufzeit (t), bei der eine ansteigende oder abfallende Flanke des Füllstands-Maximums ($M_L$') einen vorgegebenen Schwellwert über- oder unterschreitet, bestimmt wird,

**12.** Verfahren nach Anspruch 11, bei dem

- der Laufzeitbereich zur Ableitung der Perioden-Hüllkurve (#(t)) in diskrete Segmente unterteilt wird,

- die Länge des Zeitfensters (F) gleich einer Länge einer vorgegebenen Anzahl von Segmenten ist,

- das Zeitfenster (F) bei der schrittweisen Verschiebung in jedem Schritt um ein Segment verschoben wird, und

- den einzelnen Positionen des Zeitfensters (F) jeweils diejenige Laufzeit ($t_M$) zugeordnet wird, über der sich in der jeweiligen Position eine Fenstermitte ($F_M$) des Zeitfensters (F) befindet.

**13.** Verfahren nach Anspruch 1, bei dem

- die Signalpulse periodisch mit der Wiederholfrequenz gesendete Mikrowellenpulse sind, und

- das Hilfssignal (ZF) ein zeitgedehntes Abbild des Empfangssignals (E) ist, oder bei dem

- die Signalpulse periodisch mit der Wiederholfrequenz gesendete Ultraschallpulse sind.

**14.** Füllstandsmessgerät zur Ausführung eines Verfahrens gemäß einem der vorangehenden Ansprüche, mit

- einer Sende- und Empfangseinrichtung (7, 7') zum Senden der Signalpulse und zum Empfang der Empfangssignale (E),

- einer Eingangsschaltung zur Ableitung der Hilfssignale (ZF, ZA), und

- einer Mess- und Auswerteeinheit (5), die geeignet ist

-- in jedem Messzyklus die Laufzeiten ($t_i$)

der Nulldurchgänge des im jeweiligen Messzyklus abgeleiteten Hilfssignals (ZF, ZA) zu bestimmen,

-- anhand der Laufzeiten ($t_i$) der Nulldurchgänge der Hilfssignale (ZF, ZA) des aktuellen und mehrer vorangegangener Messzyklen in jedem Messzyklus die Phasen-Häufigkeitsverteilung (N(t)) zu bestimmen,

-- eine Laufzeit ($t_{NV}$) eines der Grundlaufzeit ($t_a$) am nächsten liegenden Maximums ($NV_{max}$) der Häufigkeitsverteilung (N(t)) als Füllstandslaufzeit ($t_L$) Zu bestimmen, und

-- der Füllstand (L) anhand einer Ausbreitungsgeschuindigkeit der Signalpulse, einer Einbauhöhe ($H_o$) der Sende- und Empfangseinrichtung (7,7') oberhalb des Behälters (1) une der Füllestands-Lanfzeit ($t_L$) zu bestimmen.

**15.** Füllstandsmessgerät nach Anspruch 14, bei dem die Mess- und Auswerteeinheit (5)

- einen Gleichrichter (29) zur Gleichrichtung des Hilfssignals (ZF, ZA),

- eine an den Gleichrichter (29) angeschlossene Differenzierstufe (39) zur Bestimmung einer zweiten Ableitung des gleichgerichteten Hilfssignals ($|ZF|$, $|ZA|$) nach der Laufzeit (t),

- eine an die Differenzierstufe (39) angeschlossene Messeinrichtung (41) zur Erfassung von in einem Ausgangssignal (P) der Differenzierstufe (39) auftretenden Peaks ($P_i$) und deren Laufzeiten ($t_i$), und

- eine der Messeinrichtung (41) nach geschaltete intelligente elektronische Einheit (43), insb. einen Mikrocontroller, umfasst.

**Claims**

**1.** Procedure for the measurement of a level (L) of a medium (3) located in a vessel (1), wherein the following occurs in consecutive measurement cycles,

- signal pulses of a predefined frequency ($f_s$) are emitted into the vessel (1) using a transmission and reception unit (7, 7') at a predefined repetition frequency ($f_r$), and their signal parts (R) reflected in the vessel (1) in the direction of the transmission and reception unit (7, 7') are received as a reception signal (E) after a transit time (t) that depends on the distance traveled,

- on the basis of the reception signal (E), an auxiliary signal (ZF, ZA) is derived over a predefined transit time range, said auxiliary signal providing amplitude and phase information of the reception signal (E), which is contained in the reception signal (E), as a function of the associated transit time (t),

- a transit time (t) of a signal part that is reflected at a medium surface (9) is determined as a base transit time ($t_G$) on the basis of the auxiliary signal,

- transit times ($t_i$) of zero crossings of the auxiliary signal (ZF, H) are determined,

- on the basis of the transit times ($t_i$) of the zero crossings of the auxiliary signals (ZF, ZA) determined in the current measurement cycle and in several previous measurement cycles, a phase frequency distribution (N(t)) is derived as a function of the transit time (t), said distribution indicating the frequencies at which zero crossings were present in the associated auxiliary signals (ZF, H) at the respective transit times (t),

- a transit time ($t_{NV}$) of a maximum ($NV_{max}$) of the frequency distribution (N(t)), which is closest to the base transit time ($t_G$), is determined as the level transit time ($t_L$), and

- the level (L) is determined on the basis of a propagation speed of the signal pulses, an installation height ($H_0$) of the transmission and reception unit (7, 7') above the vessel (1) and the level transit time ($t_L$).

2. Procedure as claimed in Claim 1, wherein

- a cross correlation is formed between the phase frequency distribution (N(t)) and a reference distribution, and

- the level transit time ($t_L$) is determined on the basis of a transit time of a maximum - which is closest to the base transit time ($t_G$) - of a distribution also resulting from the cross correlation.

3. Procedure as claimed in Claim 1, wherein

- the frequency values of the phase frequency distribution (N(t)) are filtered using an average filter, and

- the level transit time ($t_L$) is determined using a transit time of a maximum - which is closest to the base transit time ($t_G$) - of the phase frequency distribution which is filtered using the average filter.

4. Procedure as claimed in Claim 1, wherein

- average filtering is performed over the transit times ($t_i$) of the zero crossings of the auxiliary signals (ZF), which are determined in consecutive measurement cycles, and

- the phase frequency distribution (N(t)) is derived using the filtered transit times obtained for the individual measurement cycles from this average filtering.

5. Procedure as claimed in Claim 1, wherein

- the transit time range is divided into discrete segments of equal length,

- the segments in which the auxiliary signal (ZF, ZA) presents zero crossings are determined in each auxiliary signal (ZF, ZA), and

- the phase frequency distribution (N(t)) is recorded as a histogram, wherein the histogram classes correspond to a segment in each case.

6. Procedure as claimed in Claim 1, wherein the phase frequency distribution (N(t)) is determined in each measurement cycle using the transit times ($t_i$) of the zero crossings of the auxiliary functions (ZF, ZA) derived in this measurement cycle and in a predefined number (k) of previous measurement cycles.

7. Procedure as claimed in Claim 1, wherein the phase frequency distribution (N(t)) is recorded continuously and is updated in every measurement cycle, in that

- the frequencies of the phase frequency distribution (N(t)) determined in the previous measurement cycle are multiplied by a predefined decay factor ($\beta$) in each measurement cycle, and

- the transit times ($t_i$) of the zero crossings which are new in each measurement cycle are added to the frequencies existing at the corresponding transit times (t), reduced by the decay factor ($\beta$).

8. Procedure as claimed in Claim 6 or 7, wherein a number of measurement cycles taken into consideration in phase frequency distribution (N(t)) is predefined in a permanent manner using a predefined velocity of level change which can be expected, or is adjusted continuously to a current velocity of level change measured during the process.

9. Procedure as claimed in Claim 1, wherein the phase frequency distribution (N(t)) is only recorded within a transit time window (G) surrounding the base transit time ($t_G$) determined in the particular measurement cycle,

- said window extending to both sides of the base transit time ($t_G$) over several reference period durations ($T_R$),

-- wherein the reference period duration ($T_R$) is equal to half a reciprocal value of a frequency corresponding to the frequency ($f_s$) of the signal pulses in the auxiliary signal (ZF, ZA), and

- wherein the width of the window is less than a width of level maxima ($M_L$) of the auxiliary functions (ZF, ZA), said maxima being caused by reflection at the surface of the medium (9).

10. Procedure as claimed in Claim 9, wherein

- a base transit time ($t_G$) measured at the start of the procedure is saved as the reference transit time ($t_R$),
- a position of the transit time window (G) along a transit time axis is defined using this reference transit time ($t_R$),
- in each measurement cycle a check is performed to determine whether a difference between the base transit time ($t_G$) measured in this measurement cycle and the recorded reference transit time ($t_R$) exceeds a predefined threshold value ($\Delta t_S$), and
- in each measurement cycle in which the difference exceeds the threshold value ($\Delta t_S$),

  -- the saved reference transit time ($t_R$) is replaced by an updated reference transit time ($t_R$) which is equal to the base transit time ($t_G$) measured in this measurement cycle, and
  -- the position of the transit time window (G) is redefined using the updated reference transit time ($t_R$),

wherein the threshold value ($\Delta t_S$) is defined as a function of the width of the transit time window and of the width of the level maxima ($M_L$) of the auxiliary function (ZF, ZA) in such a way that, in every measurement cycle, the transit time window (G) covers a transit time range of a few reference period durations ($T_R$) at both sides of the current base transit time ($t_G$).

11. Procedure as claimed in Claim 1, wherein the base transit time ($t_G$) is determined in each measurement cycle using the transit times ($t_i$) of the zero crossings of the auxiliary signal (ZF, ZA) derived in the respective measurement cycle, in that

  - the time durations ($T_i$) between consecutive zero crossings of the auxiliary signal (ZF, ZA) are determined
  - a time window (F) of a predefined length is shifted gradually over the entire transit time range,
  - for each position of the time window (F), a frequency (#) is determined at which periods of time ($T_i$) occur in the time window (F) whose length corresponds to half a period duration corresponding in the auxiliary signal (ZF, ZA) to the frequency ($f_S$) of the signal pulses,
  - a period frequency distribution (#(t)) of the frequencies (#) is determined as a function of the transit times (t) assigned to the positions of the time window (F),
  - a maximum ($M_L$) of the period frequency distribution (#(t)) is determined, said maximum being due to the reflection of the signal pulses at the surface of the medium (9), and

- the base transit time ($t_G$) is determined using a transit time (t) of the level maximum ($M_L$'), particularly a transit time where the level maximum ($M_L$') adopts its maximum value, or a transit time where an increasing or decreasing edge of the level maximum ($M_L$') exceeds or drops below a predefined threshold value.

12. Procedure as claimed in Claim 11, wherein

  - the transit time range is divided into discrete segments for the derivation of the period envelope curve (#(t)),
  - the length of the time window (F) is equal to a length of a predefined number of segments,
  - during the gradual shift, the time window (F) is shifted by a segment in each step, and
  - the individual positions of the time window (F) are assigned, in each case, the transit time ($t_M$) in which a window center ($F_M$) of the time window (F) is located in the specific position.

13. Procedure as claimed in Claim 1, wherein

  - the signal pulses are microwave pulses periodically sent at the repeat frequency, and
  - the auxiliary signal (ZF) is an image of the reception signal (E) expanded over time, or wherein
  - the signal pulses are ultrasonic pulses periodically sent at the repeat frequency.

14. Level transmitter designed to carry out a procedure as claimed in one of the previous claims with

  - a transmission and reception unit (7, 7') designed to send the signal pulses and to receive the reception signals (E),
  - an input circuit designed to derive the auxiliary signals (ZF, ZA), and
  - a measurement and evaluation unit (5), which is designed to determine

    -- in each measurement cycle, the transit times ($t_i$) of the zero crossings of the auxiliary signal (ZF, ZA) derived in the measurement cycle,
    -- the phase frequency distribution (N(t)) in each measurement cycle using the transit times ($t_i$) of the zero crossings of the auxiliary signals (ZF, ZA) of the current measurement cycle and several previous measurement cycles,
    -- a transit time ($t_{NV}$) of a maximum ($NV_{max}$) of the frequency distribution (N(t)) as the level transit time ($t_L$), said maximum being closest to the base transit time ($t_G$), and
    -- the level (L) using a propagation speed of the signal pulses, an installation height ($H_o$) of the transmission and reception unit (7, 7') above the vessel (1) and the level transit time ($t_L$).

15. Level transmitter as claimed in Claim 14, wherein the measurement and exploitation unit (5) comprises

- a rectifier (29) designed to rectify the auxiliary signal (ZF, ZA),
- a differentiation stage (39) connected to the rectifier (29) to determine a second derivation of the rectified auxiliary signal (|ZF|, |ZA|) after the transit time (t),
- a measuring unit (41) connected to the differentiation stage (39) to record peaks (Pi) occurring in an output signal (P) of the differentiation stage (39), and their transit times ($t_i$), and
- a smart electronic unit (43), particularly a microcontroller, connected downstream from the measuring unit (41).

**Revendications**

1. Procédé destiné à la mesure d'un niveau (L) d'un produit (3) se trouvant dans un réservoir (1), pour lequel, dans des cycles de mesure consécutifs,

- des impulsions de signal de fréquence ($f_s$) prédéfinie sont émises dans le réservoir (1) au moyen d'un dispositif d'émission et de réception (7, 7') d'une fréquence de répétition ($f_r$) prédéfinie, et dont des parts de signal (R) réfléchies dans le réservoir (1) en direction du dispositif d'émission et de réception (7, 7') sont reçues en tant que signal de réception (E) après un temps de transit (t) dépendant de la distance parcourue,
- l'information d'amplitude et de phase du signal de réception (E), contenue dans le signal de réception (E), est déduite au moyen du signal de réception (E), en tant que fonction du signal auxiliaire (ZF, ZA) reflétant le temps de transit (t) correspondant, sur une plage de temps de transit prédéfinie,
- est déterminé en tant que temps de transit de base ($t_G$), au moyen du signal auxiliaire (ZF), un temps de transit (t) d'une part de signal réfléchie à la surface du produit (9),
- sont déterminés des temps de transit (t) de passages par zéro du signal auxiliaire (ZF, H),
- est déduite, au moyen des temps de transit (t) des passages par zéro des signaux auxiliaires (ZF, ZA), lesquels temps sont déterminés dans le cycle de mesure actuel et dans plusieurs cycles de mesure précédents, une distribution de fréquence de phase (N(t)) en tant que fonction du temps de transit (t), laquelle distribution indique des fréquences avec lesquelles des passages par zéro étaient présents aux temps de transit (t) respectifs dans les signaux auxiliaires (ZF, H) correspondants,
- est déterminé un temps de transit ($t_{NV}$) d'un maximum ($NV_{max}$) de la distribution de fréquence de phase (N(t)), lequel maximum est le plus proche du temps de transit de base ($t_G$), en tant que temps de transit de niveau ($t_L$), et
- est déterminé le niveau (L) au moyen d'une vitesse de propagation des impulsions de signal, d'une hauteur de montage ($H_o$) du dispositif d'émission et de réception (7, 7') au-dessus du réservoir (1) et du temps de transit de niveau ($t_L$).

2. Procédé selon la revendication 1, pour lequel

- est formée une corrélation croisée de la distribution de fréquence de phase (N(t)) avec la distribution de référence, et
- le temps de transit de niveau ($t_L$) est déterminé au moyen d'un temps de transit d'un maximum
- le plus proche d'un temps de transit de base ($t_G$) - d'une distribution résultant également de la corrélation croisée.

3. Procédé selon la revendication 1, pour lequel

- les valeurs de fréquence de la distribution de fréquence de phase (N(t)) sont filtrées au moyen d'un filtre de valeur moyenne, et
- le temps de transit de niveau ($t_L$) est déterminé au moyen d'un temps de transit d'un maximum
- le plus proche d'un temps de transit de base ($t_G$) - de la distribution de fréquence de phase filtrée au moyen du filtre de valeur moyenne.

4. Procédé selon la revendication 1, pour lequel

- un filtrage de valeur moyenne est effectué sur les temps de transit ($t_i$) des passages par zéro des signaux auxiliaires (ZF), lesquels temps sont déterminés dans des cycles de mesure consécutifs, et
- la distribution de fréquence de phase (N(t)) est déduite au moyen de ce filtrage de valeur moyenne pour les temps de transit filtrés, contenus dans les différents cycles de mesure.

5. Procédé selon la revendication 1, pour lequel

- la plage de temps de transit est répartie en segments de longueur égale,
- sont déterminés, dans chaque signal auxiliaire (ZF, ZA), les segments dans lesquels le signal auxiliaire (ZF, ZA) respectif présente des passages par zéro, et

- la distribution de fréquence de phase (N(t)) est enregistrée sous la forme d'un histogramme, dont les classes d'histogramme correspondent chacune à un segment.

6. Procédé selon la revendication 1, pour lequel la distribution de fréquence de phase (N(t)) est déterminée dans chaque cycle de mesure au moyen des temps de transit ($t_i$) des passages par zéro des fonctions auxiliaires (ZF, ZA) déduites dans ce cycle de mesure et dans un nombre (k) prédéfini de cycles de mesure précédents.

7. Procédé selon la revendication 1, pour lequel la distribution de fréquence de phase (N(t)) est enregistrée continuellement et actualisée dans chaque cycle de mesure, en ce

   - que sont multipliées, dans chaque cycle de mesure, les fréquences de la distribution de fréquence de phase (N(t)) déterminée dans le cycle de mesure précédent avec un facteur de décroissance ($\beta$), et
   - que les temps de transit ($t_i$) des passages par zéro, nouvellement ajoutés dans chaque cycle de mesure, sont ajoutés aux fréquences existant aux temps de transit (t) correspondants, diminués du facteur de décroissance ($\beta$).

8. Procédé selon la revendication 6 ou 7, pour lequel un nombre de cycles de mesure pris en compte dans la distribution de fréquence de phase (N(t)) est prédéfini de façon fixe au moyen d'une vitesse de changement de niveau attendue prédéfinie, ou adapté continuellement à une vitesse de changement de niveau actuelle mesurée pendant le procédé.

9. Procédé selon la revendication 1, pour lequel l'enregistrement de la distribution de fréquence de phase (N(t)) s'effectue exclusivement dans une fenêtre de temps de transit (G) englobant le temps de transit de base ($t_G$) déterminé dans chaque cycle de mesure,

   - laquelle fenêtre s'étend de part et d'autre du temps de transit de base ($t_G$) sur plusieurs durées de période de référence ($T_R$),
   -- la durée de période de référence ($T_R$) étant égale à la moitié d'une valeur réciproque d'une fréquence correspondant à la fréquence ($f_s$) des impulsions de signal dans le signal auxiliaire (ZF, ZA), et
   - dont la largeur de fenêtre est inférieure à une largeur de maxima de niveau ($M_L$) des fonctions auxiliaires (ZF, ZA), lesquels maxima sont dus à la réflexion à la surface du produit (9).

10. Procédé selon la revendication 9, pour lequel

   - est enregistré comme temps de transit de référence ($t_R$) un temps de transit de base ($t_G$) mesuré au début du procédé,
   - est définie, au moyen de ce temps de transit de référence ($t_R$), une position de la fenêtre de temps de transit (G) le long d'un axe de temps de transit,
   - on vérifie, dans chaque cycle de mesure, si une différence entre le temps de transit de base ($t_G$) mesuré dans ce cycle de mesure et le temps de transit de référence ($t_R$) enregistré dépasse un seuil ($\Delta t_S$) prédéfini, et
   - dans chaque cycle de mesure, dans lequel la différence dépasse le seuil ($\Delta t_S$),

      -- le temps de transit de référence ($t_R$) enregistré est remplacé par un temps de transit de référence ($t_R$) actualisé, qui est égal au temps de transit de base ($t_G$) mesuré dans ce cycle de mesure, et
      -- la position de la fenêtre de temps de transit (G) est redéfinie au moyen du temps de transit de référence ($t_R$) actualisé,

   le seuil ($\Delta t_S$) étant défini en fonction de la largeur de la fenêtre de temps de transit et de la largeur des maxima de niveau ($M_L$) de la fonction auxiliaire (ZF, ZA), de telle sorte que la fenêtre de temps de transit (G) recouvre dans chaque cycle de mesure une plage de temps de transit de quelques durées de période de référence ($T_R$) de part et d'autre du temps de transit de base ($t_G$) actuel.

11. Procédé selon la revendication 1, pour lequel le temps de transit de base ($t_G$) est déterminé dans chaque cycle de mesure au moyen des temps de transit ($t_i$) des passages par zéro du signal auxiliaire (ZF, ZA) dérivé dans le cycle de mesure respectif, en ce

   - que les durées ($T_i$) entre des passages par zéro consécutifs du signal auxiliaire (ZF, ZA) sont déterminées
   - qu'une fenêtre de temps (F) de longueur prédéfinie est décalée pas à pas sur la totalité de la plage de temps de transit,
   - qu'est déterminée, pour chaque position de la fenêtre de temps (F), une fréquence (#) avec laquelle apparaissent, dans la fenêtre de temps (F), des durées ($T_i$) dont la longueur correspond à une moitié d'une durée de période correspondant dans le signal auxiliaire (ZF, ZA) à la fréquence ($f_S$) des impulsions de signal,
   - qu'est déterminée une distribution de fréquence de période (N(t)) des fréquences (#) en fonction des temps de transit (t) associés aux positions de la fenêtre de temps (F),

- qu'est déterminé un maximum (M$_L$) de la distribution de fréquence de période (N(t)), lequel maximum est dû à la réflexion des impulsions de signal à la surface du produit (9), et
- qu'est déterminé le temps de transit de base (t$_G$) au moyen d'un temps de transit (t) du maximum de niveau (M$_L$'), notamment d'un temps de transit pour lequel le maximum de niveau (M$_L$') adopte sa valeur maximale, ou d'un temps de transit pour lequel un front montant ou descendant du maximum de niveau (M$_L$') passe au-dessus ou au-dessous d'un seuil prédéfini.

12. Procédé selon la revendication 11, pour lequel

- la plage de temps de transit pour la déduction de l'enveloppante de période (#(t)) est répartie en segments discrets,
- la longueur de la fenêtre de temps (F) est égale à la longueur d'un nombre prédéfini de segments,
- la fenêtre de temps (F), dans le cadre du décalage pas à pas, est décalée d'un segment dans chaque pas, et
- est associé aux différentes positions de la fenêtre de temps (F), respectivement le temps de transit (t$_M$) pendant lequel un centre de fenêtre (F$_M$) de la fenêtre de temps (F) se trouve dans la position respective.

13. Procédé selon la revendication 1, pour lequel

- les impulsions de signal sont des impulsions micro-ondes émises périodiquement à la fréquence de répétition, et
- le signal auxiliaire (ZF) est une image étalée dans le temps du signal de réception (E), ou pour lequel
- les impulsions de signal sont des impulsions ultrasonores émises périodiquement à la fréquence de répétition.

14. Transmetteur de niveau destiné à l'exécution selon l'une des revendications précédentes, avec

- un dispositif d'émission et de réception (7, 7') destiné à l'émission des impulsions de signal et à la réception des signaux de réception (E),
- un circuit d'entrée destiné à la détermination des signaux auxiliaires (ZF, ZA), et
- une unité de mesure et d'exploitation (5), laquelle est conçue de manière à déterminer

-- dans chaque cycle de mesure les temps de transit (t$_i$), des passages par zéro du signal auxiliaire (ZF, ZA) déterminé dans le cycle de mesure respectif,

-- au moyen des temps de transit (t$_i$) des passages par zéro des signaux auxiliaires (ZF, ZA) du cycle de mesure actuel et de plusieurs cycles de mesure précédents, la distribution de fréquence de phase (N(t)) dans chaque cycle de mesure,

-- un temps de transit (t$_{NV}$) d'un temps de transit de base (t$_G$) au prochain maximum (NV$_{max}$) de la distribution de fréquence (N(t)) en tant que temps de transit de niveau (t$_L$), et

-- le niveau (L) au moyen d'une vitesse de propagation des impulsions de signal, d'une hauteur de montage (H$_o$) du dispositif d'émission et de réception (7, 7') au-dessus du réservoir (1) et du temps de transit de niveau (t$_L$).

15. Transmetteur de niveau selon la revendication 14, pour lequel l'unité de mesure et d'exploitation (5) comprend

- un redresseur (29) destiné à redresser le signal auxiliaire (ZF, ZA),
- un étage différentiel (39) relié au redresseur (29), destiné à la détermination d'une dérivée seconde du signal auxiliaire redressé (|ZF|, |ZA|) en fonction du temps de transit (t),
- un dispositif de mesure (41) relié à l'étage différentiel (39) destiné à la mesure d'un pic (Pi) apparaissant dans un signal de sortie (P) de l'étage différentiel (39), et de ses temps de transit (t$_i$), et
- une unité électronique (43) intelligente, notamment un microcontrôleur, couplée en aval du dispositif de mesure (41).

Fig. 1

Fig. 2

Fig. 3

EP 2 795 268 B1

Fig. 4

EP 2 795 268 B1

Fig. 5

Fig. 6

**IN DER BESCHREIBUNG AUFGEFÜHRTE DOKUMENTE**

**In der Beschreibung aufgeführte Patentdokumente**

- EP 1324067 A2
- DE 4407369 A1
- WO 02065066 A1